(19) Europäisches Patentamt
European Patent Office
Office européen des brevets

(11) **EP 0 655 726 B1**

## (12) EUROPEAN PATENT SPECIFICATION

(45) Date of publication and mention
of the grant of the patent:
**08.09.1999 Bulletin 1999/36**

(51) Int Cl.⁶: **G09G 3/36**

(21) Application number: **94307896.4**

(22) Date of filing: **27.10.1994**

(54) **Grey level selecting circuit for a display driver**

Graupegelwählende Schaltung für eine Anzeigesteuerschaltung

Circuit de sélection de niveau de gris pour un circuit de commande d'affichage

(84) Designated Contracting States:
**DE FR GB NL**

(30) Priority: **26.11.1993 JP 29710393**

(43) Date of publication of application:
**31.05.1995 Bulletin 1995/22**

(73) Proprietor: **SHARP KABUSHIKI KAISHA**
**Osaka-shi, Osaka-fu 545-0013 (JP)**

(72) Inventors:
• **Okada, Hisao**
**Ikoma-gun, Nara-ken (JP)**
• **Yamamoto, Yuji**
**Kobe-shi, Hyogo-ken (JP)**
• **Seo, Mitsuyoshi**
**Tenri-shi, Nara-ken (JP)**
• **Tanaka, Kuniaki**
**Gakuendaiwa-cho, Nara-shi, Nara-ken (JP)**

(74) Representative: **Suckling, Andrew Michael et al**
**Marks & Clerk,**
**Nash Court,**
**Oxford Business Park South**
**Oxford OX4 2RU (GB)**

(56) References cited:
EP-A- 0 171 547     EP-A- 0 433 054
EP-A- 0 515 191     EP-A- 0 624 862

• PATENT ABSTRACTS OF JAPAN vol. 17, no. 451 (P-1595) 18 August 1993 & JP-A-05 100 635 (NEC CO.) 23 April 1993

**Description**

**BACKGROUND OF THE INVENTION**

1. Field of the Invention:

The present invention relates to a driving circuit for a display apparatus. More particularly, the present invention relates to a driving circuit for an active matrix type liquid crystal display apparatus which displays an image with multiple gray scales in accordance with digital video signals.

2. Description of the Related Art:

An active matrix type liquid crystal display apparatus includes a display panel and a driving circuit for driving the display panel. The display panel includes a pair of glass substrates and a liquid crystal layer formed between the pair of glass substrates. On one of the pair of glass substrates, a plurality of gate lines and a plurality of data lines are formed. The driving circuit is disposed for every data line in the display panel, and the driving circuit applies a driving voltage to the liquid crystal layer of the display panel. The driving circuit includes a gate driver for selecting a plurality of switching elements connected to the gate lines and the data lines for every gate line, and a data driver for supplying a video signal corresponding to an image to pixel electrodes via the selected switching elements.

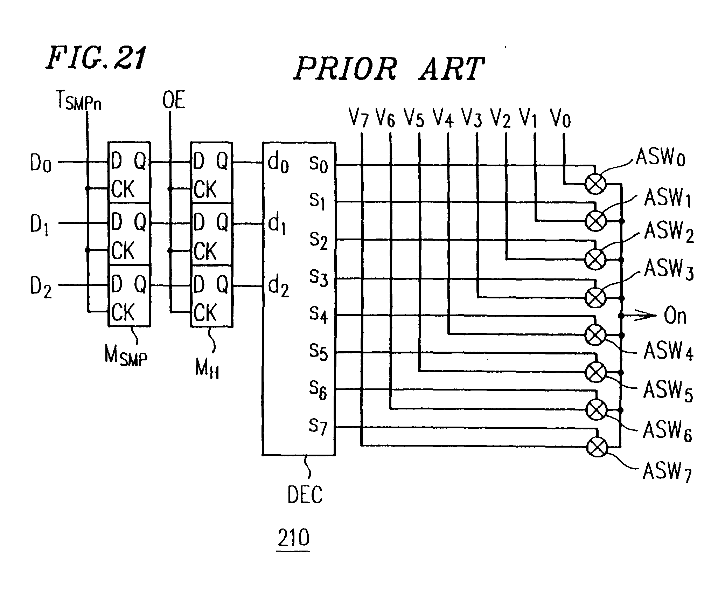

Figure **21** shows a configuration for a part of a data driver in a prior art driving circuit. The circuit **210** shown in Figure **21** outputs a video signal to one of a plurality of data lines. Accordingly, the data driver requires circuits **210** the number of which is equal to the number of data lines provided in a display panel. For simplicity of explanation, it is herein assumed that video data consists of three bits ($D_0$, $D_1$, $D_2$). On such an assumption, the video data may have eight values of 0 to 7, and a signal voltage supplied to each pixel is one of eight levels $V_0$-$V_7$.

The circuit **210** includes a sampling flip-flop $\mathbf{M_{SMP}}$, a holding flip-flop $\mathbf{M_H}$, a decoder **DEC**, and analog switches $\mathbf{ASW_0}$-$\mathbf{ASW_7}$. To each of the analog switches $\mathbf{ASW_0}$-$\mathbf{ASW_7}$, a corresponding one of external source voltages $V_0$-$V_7$ of the respective eight levels which are different from each other is supplied. In addition, to the analog switches $\mathbf{ASW_0}$-$\mathbf{ASW_7}$, control signals $S_0$-$S_7$ are supplied from the decoder **DEC**, respectively. Each of the control signals $S_0$-$S_7$ is used for switching the ON/OFF state of the analog switch.

Next, the operation of the circuit 210 is described. At the rising of a sampling pulse $T_{SMPn}$ corresponding to the nth pixel, the sampling flip-flop $\mathbf{M_{SMP}}$ gets video data ($D_0$, $D_1$, $D_2$), and holds the video data therein. When such video data sampling for one horizontal period is completed, an output pulse signal OE is applied to the holding flip-flop $\mathbf{M_H}$. Upon receiving the output pulse signal OE, the holding flip-flop $\mathbf{M_H}$ gets the video data ($D_0$, $D_1$, $D_2$) from the sampling flip-flop $\mathbf{M_{SMP}}$, and transfers the video data to the decoder **DEC**.

The decoder **DEC** decodes the video data ($D_0$, $D_1$, $D_2$), and produces a control signal for turning on one of the analog switches $\mathbf{ASW_0}$-$\mathbf{ASW_7}$ in accordance with the respective values (0-7) of the video data ($D_0$, $D_1$, $D_2$). As a result, one of the external source voltages $V_0$-$V_7$ is output to a data line $\mathbf{O_n}$. For example, in the case where the value of the video data held in the holding flip-flop $\mathbf{M_H}$ is 3, the decoder **DEC** outputs a control signal $\mathbf{S_3}$ which turns on the analog switch $\mathbf{ASW_3}$. As a result, the analog switch $\mathbf{ASW_3}$ becomes into the ON-state, and $V_3$ of the external source voltages $V_0$-$V_7$ is output to the data line $\mathbf{O_n}$.

Such a prior art data driver involves a problem in that, as the number of bits in video data increases, the circuit configuration becomes complicated and the size of the circuit is increased. This is because the prior art data driver requires gray-scale voltages the number of which is equal to the gray scales to be displayed. For example, in the case where the video data consists of 4 bits for displaying 16 gray-scale images, the number of required gray-scale voltages is: $2^4 = 16$. Similarly, in the case where the video data consists of 6 bits for displaying 64 gray-scale images, the number of required gray-scale voltages is: $2^6 = 64$. In the case of 8-bit video data for displaying 256 gray-scale images, the number of required gray-scale voltages is: $2^8 = 256$. As described above, the prior art data driver requires a large number of gray-scale voltages as the number of bits of video data increases. This causes the circuit configuration to be complicated and the circuit size to be increased. Moreover, interconnections between voltage source circuits and analog switches are also complicated.

For the above-mentioned reasons, the actual application of such a prior art data driver is limited to 3-bit video data or 4-bit video data.

In order to solve such prior art problems, there have been proposed methods and circuits for driving a display apparatus in Japanese Laid-Open Patent Publication Nos. 4-136983, 4-140787, and 6-27900 (EP-A-0 478 386 and EP-A-0 515 191).

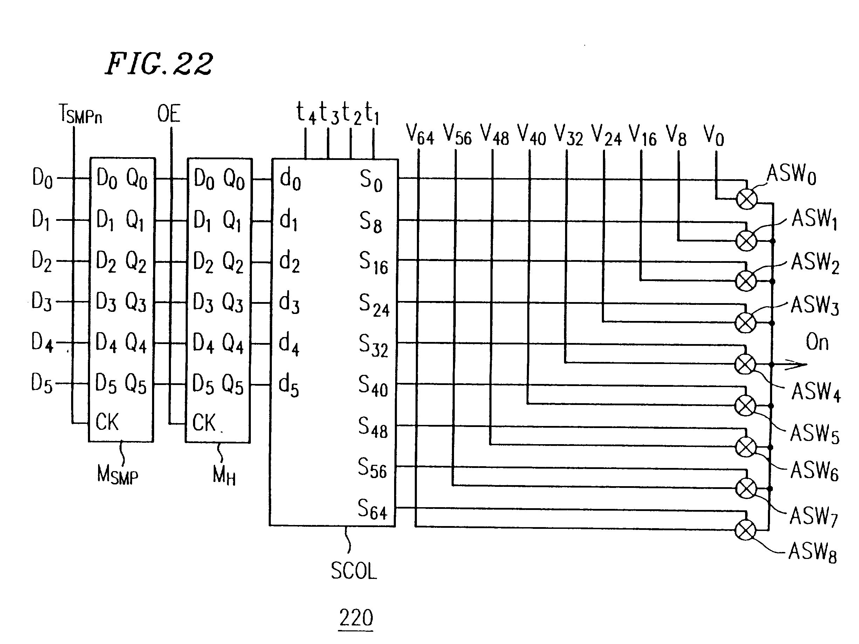

Figure **22** shows a configuration for a part of a driving circuit disclosed in Japanese Laid-Open Patent Publication No. 6-27900. The circuit **220** shown in Figure **22** outputs a video signal to one of a plurality of data lines. Accordingly, the data driver requires circuits **220** the number of which is equal to the number of data lines provided in a display panel. It is herein assumed that video data consists of 6 bits ($D_0$, $D_1$, $D_2$, $D_3$, $D_4$, $D_5$). On such an assumption, the video data may have 64 values of 0-63, and a signal voltage applied to each pixel is one of nine gray-scale voltages $V_0$, $V_8$, $V_{16}$, $V_{24}$, $V_{32}$, $V_{40}$, $V_{48}$, $V_{56}$, and $V_{64}$. and a plurality of interpolated voltages which are produced from the gray-scale voltages $V_0$, $V_8$, $V_{16}$, $V_{24}$, $V_{32}$, $V_{40}$, $V_{48}$, $V_{56}$, and $V_{64}$.

The circuit **220** includes a sampling flip-flop $\mathbf{M_{SMP}}$, a holding flip-flop $\mathbf{M_H}$, a selection control circuit **SCOL**, and analog switches $\mathbf{ASW_0}$-$\mathbf{ASW_8}$. To each of the analog switches $\mathbf{ASW_0}$-$\mathbf{ASW_8}$, a corresponding one of gray-scale voltages $V_0$, $V_8$, $V_{16}$, $V_{24}$, $V_{32}$, $V_{40}$, $V_{48}$, $V_{56}$, and $V_{64}$ of respective levels which are different from each other is supplied. To the analog switches $\mathbf{ASW_0}$-$\mathbf{ASW_8}$, control signals $S_0$, $S_8$, $S_{16}$, $S_{24}$, $S_{32}$, $S_{40}$, $S_{48}$, $S_{56}$, and $S_{64}$ are supplied from the selection control circuit **SCOL**, respectively. Each of the control signals are used to switch the ON/OFF state of the analog signal.

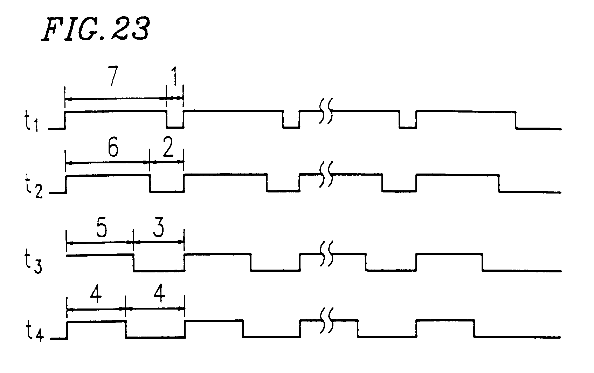

To the selection control circuit **SCOL**, clock signals $t_1$, $t_2$, $t_3$, and $t_4$ are supplied. As is shown in Figure **23**, the clock signals $t_1$, $t_2$, $t_3$, and $t_4$ have duty ratios which are different from each other. The selection control circuit **SCOL** receives 6-bit video data $d_5$, $d_4$, $d_3$, $d_2$, $d_1$, and $d_0$, and outputs one of control signals $S_0$, $S_8$, $S_{16}$, $S_{24}$, $S_{32}$, $S_{40}$, $S_{48}$, $S_{56}$, and $S_{64}$ in accordance with the value of the received video data. The relationship between the input and the output of the selection control circuit **SCOL** is determined by using a logical table.

Table 1 shows a logical table for the selection control circuit **SCOL**. The 1st to 6th columns of Table 1 indicate values of bits $d_5$, $d_4$, $d_3$, $d_2$, $d_1$, and $d_0$ of the video data, respectively. The 7th to 15th columns of Table 1 indicate values of control signals $S_0$, $S_8$, $S_{16}$, $S_{24}$, $S_{32}$, $S_{40}$, $S_{48}$, $S_{56}$, and $S_{64}$, respectively. Each blank in the 7th to 15th columns in Table 1 means that the value of the control signal is 0. In addition, "$t_i$" indicates that the value of the control signal is 1 when the value of the clock signal $t_i$ is 1, and the value of the control signal is 0 when the value of the clock signal $t_i$ is 0. Also, "$t_i$-bar" indicates that the value of the control signal is 0 when the value of the clock signal $t_i$ is 1, and the value of the control signal is 1 when the value of the clock signal $t_i$ is 0. Herein, i = 1, 2, 3, and 4. Hereinafter, in this specification, it is defined that the notation 'X-bar' is equivalent to the notation in which 'X' is provided with an upper horizontal bar. Note that 'X' is an arbitrarily selected symbol.

## Table 1

| $d_5$ | $d_4$ | $d_3$ | $d_2$ | $d_1$ | $c_0$ | $s_0$ | $s_8$ | $s_{16}$ | $s_{24}$ | $s_{32}$ | $s_{40}$ | $s_{48}$ | $s_{56}$ | $s_{64}$ |
|---|---|---|---|---|---|---|---|---|---|---|---|---|---|---|
| 0 | 0 | 0 | 0 | 0 | 0 | 1 | 0 | | | | | | | |
| 0 | 0 | 0 | 0 | 0 | 1 | $t_1$ | $\bar{t}_1$ | | | | | | | |
| 0 | 0 | 0 | 0 | 1 | 0 | $t_2$ | $\bar{t}_2$ | | | | | | | |
| 0 | 0 | 0 | 0 | 1 | 1 | $t_3$ | $\bar{t}_3$ | | | | | | | |
| 0 | 0 | 0 | 1 | 0 | 0 | $t_4$ | $\bar{t}_4$ | | | | | | | |
| 0 | 0 | 0 | 1 | 0 | 1 | $\bar{t}_3$ | $t_3$ | | | | | | | |
| 0 | 0 | 0 | 1 | 1 | 0 | $\bar{t}_2$ | $t_2$ | | | | | | | |
| 0 | 0 | 0 | 1 | 1 | 1 | $\bar{t}_1$ | $t_1$ | | | | | | | |
| 0 | 0 | 1 | 0 | 0 | 0 | 0 | 1 | 0 | 0 | 0 | 0 | 0 | 0 | 0 |
| ≈ | ≈ | ≈ | ≈ | ≈ | ≈ | ≈ | ≈ | ≈ | ≈ | ≈ | ≈ | ≈ | ≈ | ≈ |
| | | | | | | | | | $\bar{t}_3$ | $t_3$ | | | | |
| 0 | 1 | 1 | 1 | 1 | 0 | | | | $\bar{t}_2$ | $t_2$ | | | | |
| 0 | 1 | 1 | 1 | 1 | 1 | | | | $\bar{t}_1$ | $t_1$ | | | | |
| 1 | 0 | 0 | 0 | 0 | 0 | | | | | 1 | 0 | | | |
| 1 | 0 | 0 | 0 | 0 | 1 | | | | | $t_1$ | $\bar{t}_1$ | | | |
| 1 | 0 | 0 | 0 | 1 | 0 | | | | | $t_2$ | $\bar{t}_2$ | | | |
| 1 | 0 | 0 | 0 | 1 | 1 | | | | | $t_3$ | $\bar{t}_3$ | | | |
| 1 | 0 | 0 | 1 | 0 | 0 | | | | | $t_4$ | $\bar{t}_4$ | | | |
| 1 | 0 | 0 | 1 | 0 | 1 | | | | | $\bar{t}_3$ | $t_3$ | | | |
| 1 | 0 | 0 | 1 | 1 | 0 | | | | | $\bar{t}_2$ | $t_2$ | | | |
| 1 | 0 | 0 | 1 | 1 | 1 | | | | | $\bar{t}_1$ | $t_1$ | | | |
| 1 | 0 | 1 | 0 | 0 | 0 | 0 | 0 | 0 | 0 | 0 | 1 | 0 | 0 | 0 |
| ≈ | ≈ | ≈ | ≈ | ≈ | ≈ | ≈ | ≈ | ≈ | ≈ | ≈ | ≈ | ≈ | ≈ | ≈ |
| | | | | | | | | | | | | $\bar{t}_3$ | $t_3$ | |
| 1 | 1 | 0 | 1 | 1 | 0 | | | | | | | $\bar{t}_2$ | $t_2$ | 0 |
| 1 | 1 | 0 | 1 | 1 | 1 | | | | | | | $\bar{t}_1$ | $t_1$ | 0 |
| 1 | 1 | 1 | 0 | 0 | 0 | | | | | | | | 1 | 0 |
| 1 | 1 | 1 | 0 | 0 | 1 | | | | | | | | $t_1$ | $\bar{t}_1$ |
| 1 | 1 | 1 | 0 | 1 | 0 | | | | | | | | $t_2$ | $\bar{t}_2$ |
| 1 | 1 | 1 | 0 | 1 | 1 | | | | | | | | $t_3$ | $\bar{t}_3$ |
| 1 | 1 | 1 | 1 | 0 | 0 | | | | | | | | $t_4$ | $\bar{t}_4$ |
| 1 | 1 | 1 | 1 | 0 | 1 | | | | | | | | $\bar{t}_3$ | $t_3$ |
| 1 | 1 | 1 | 1 | 1 | 0 | | | | | | | | $\bar{t}_2$ | $t_2$ |
| 1 | 1 | 1 | 1 | 1 | 1 | | | | | | | | $\bar{t}_1$ | $t_1$ |

As is seen from Table 1, when the value of the video data is a multiple of 8, one of the gray-scale voltages

$V_0, \cdots, V_{64}$ is output to the data line $\mathbf{O_n}$. When the value of the video data is not a multiple of 8, an oscillating voltage which oscillates between a pair of gray-scale voltages $V_0, \cdots, V_{64}$ at a duty ratio of one of the clock signals $t_1, t_2, t_3,$ and $t_4$ is output to the data line $\mathbf{O_n}$. The data driver produces seven different oscillating voltages between respective adjacent gray-scale voltages, in accordance with the logical table of Table 1. Thus, it is possible to attain 64 gray-scale images by using only 9 levels of gray-scale voltages.

The following equations are logical equations which define the relationships among the video data $d_5, d_4, d_3, d_2, d_1,$ and $d_0$, the clock signals $t_1, t_2, t_3,$ and $t_4$, and the control signals $S_0, S_8, S_{16}, S_{24}, S_{32}, S_{40}, S_{48}, S_{56},$ and $S_{64}$ shown in Table 1.

$$S_0 = \{0\} + \{1\}t_1 + \{2\}t_2 + \{3\}t_3 + \{4\}t_4 + \{5\}"t_3" +$$

$$\{6\}"t_2" + (7)"t_1" \tag{1}$$

$$S_8 = \{1\}"t_1" + \{2\}"t_2" + \{3\}"t_3" + \{4\}"t_4" + \{5\}t_3 +$$

$$\{6\}t_2 + \{7\}t_1 + \{8\} + \{9\}t_1 + \{10\}t_2 + \{11\}t_3 +$$

$$\{12\}t_4 + \{13\}"t_3" + \{14\}"t_2" + (15)"t_1" \tag{2}$$

$$S_{16} = \{9\}"t_1" + \{10\}"t_2" + \{11\}"t_3" + \{12\}"t_4" + \{13\}t_3$$

$$+ \{14\}t_2 + \{15\}t_1 + \{16\} + \{17\}t_1 + \{18\}t_2$$

$$+ \{19\}t_3 + \{20\}t_4 + \{21\}"t_3" + \{22\}"t_2" + (23)"t_1" \tag{3}$$

Similarly, the control signals $S_{24}, S_{32}, S_{40},$ and $S_{48}$ are defined. The control signals $S_{56}$ and $S_{64}$ are defined as follows.

$$S_{56} = \{49\}"t_1" + \{50\}"t_2" + \{51\}"t_3" + \{52\}"t_4"$$

$$+ \{53\}t_3 + \{54\}t_2 + \{55\}t_1 + \{56\} + \{57\}t_1$$

$$+ \{58\}t_2 + \{59\}t_3 + \{60\}t_4 + \{61\}"t_3" + \{62\}"t_2"$$

$$+ \{63\}"t_1" \tag{4}$$

$$S_{64} = \{57\}"t_1" + \{58\}"t_2" + \{59\}"t_3" + \{60\}"t_4"$$

$$+ \{61\}t_3 + \{62\}t_2 + \{63\}t_1 \tag{5}$$

In the above equations, $\{i\}$ indicates a value when the binary data $(d_5, d_4, d_3, d_2, d_1, d_0)$ is represented in the decimal notation. For example, $\{1\} = (d_5, d_4, d_3, d_2, d_1, d_0) = (0, 0, 0, 0, 0, 1)$. In addition, $"t_i"$ indicates a signal which is inverted from the signal $t_i$.

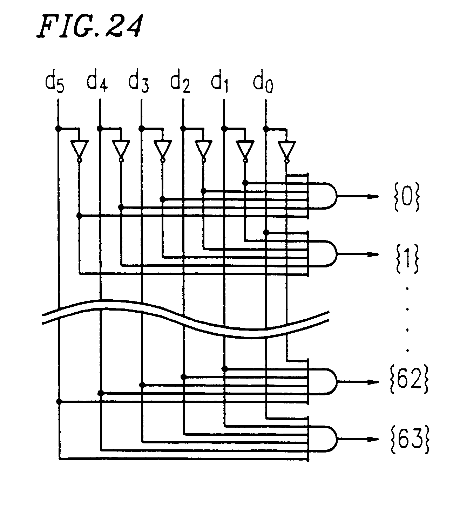

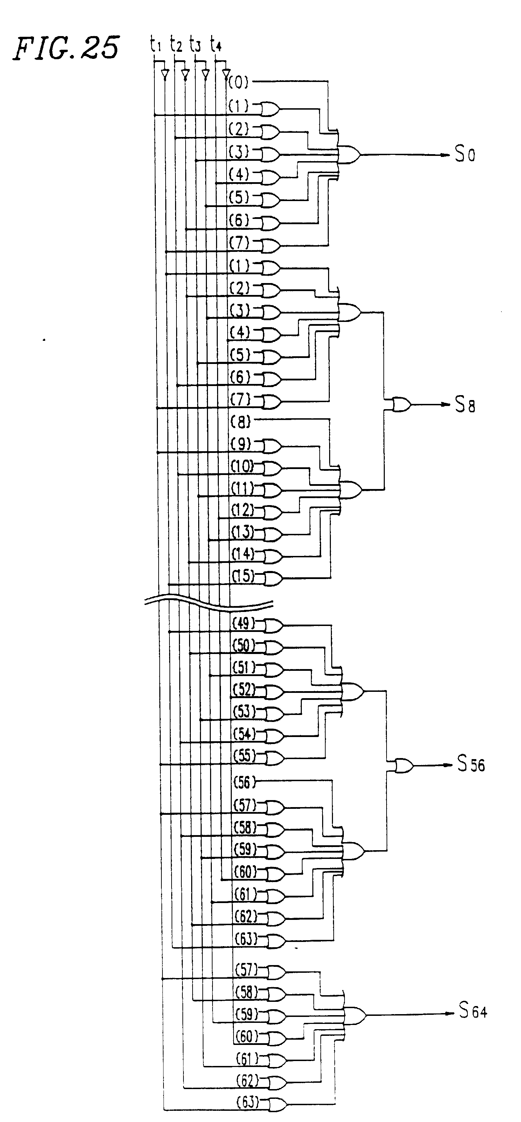

On the basis of the above logical equations, logical circuits shown in Figures **24** and **25** are obtained. The selection control circuit **SCOL** is constructed by the logical circuits shown in Figures **24** and **25**.

The logical circuit shown in Figure **24** produces 64 kinds of gray-scale selection data $\{0\}$ - $\{63\}$ in accordance with the value of 6-bit video data $(d_5, d_4, d_3, d_2, d_1, d_0)$. The logical circuit shown in Figure **25** produces control signals $S_0, S_8, S_{16}, S_{24}, S_{32}, S_{40}, S_{48}, S_{56},$ and $S_{64}$, based on the gray-scale selection data $\{0\}$ - $\{63\}$ and the clock signals $t_1, t_2, t_3,$ and $t_4$. For example, a case where the video data $(d_5, d_4, d_3, d_2, d_1, d_0) = (0, 0, 0, 0, 0, 1)$ is input to the selection control circuit **SCOL** is explained. In such a case, the logical circuit shown in Figure **24** outputs the gray-scale selection data $\{1\}$. The logical circuit shown in Figure **25** receives the gray-scale selection data $\{1\}$ and alternately outputs the control signal $S_0$ and the control signal $S_8$ at a duty ratio of the clock signal $t_1$. As a result, the gray-scale voltage $V_0$

and the gray-scale voltage $V_8$ are alternately output via the analog switch **ASW$_0$** and the analog switch **ASW$_1$** at the duty ratio of the clock signal $t_1$ to the data line **O$_n$**.

The actual data driver requires the selection control circuits **SCOL** the number of which is equal to the number of data lines. Thus, the circuit scale of the selection control circuit **SCOL** largely affects the chip size of the integrated circuit (LSI) on which the data driver is installed. If the circuit scale of the selection control circuit **SCOL** becomes large, the cost for the integrated circuit is increased. Moreover, if the number of bits of video data increases in order to realize an image of high resolution, the circuit scale of the data driver is further increased. This also increases the size and the production cost of the integrated circuit.

EP-A-0 624 862, which is prior art under Article 54(3) EPC for designated states DE, FR, GB and NL, discloses a matrix type liquid crystal display apparatus as described in comparative example 1.

The present invention provides a driving circuit for driving a display apparatus, the display apparatus including pixels and data lines for applying voltages to said pixels and displaying, in use, an image with multiple grey scales in accordance with video data consisting of a plurality of bits, said driving circuit comprising:

oscillating voltage selecting means for generating an oscillating signal by selecting one of a plurality of predetermined oscillating signals or by combining two or more of the plurality of predetermined oscillating signals in accordance with video data consisting of bits selected from said plurality of bits, and for outputting said generated oscillating signal;

inversion means for inverting said generated oscillating signal thereby to produce an inverted oscillating signal;

grey-scale voltage selecting means for producing grey-scale voltage selecting signals which select a first grey-scale voltage and a second grey-scale voltage from a plurality of grey-scale voltages supplied by a grey-scale voltage supply means, in accordance with video data consisting of bits other than said selected bits of said plurality of bits; and

output means for outputting said first grey-scale voltage and said second grey-scale voltage selected by said grey-scale voltage selecting means to said data lines, in accordance with said generated oscillating signal and said inverted oscillating signal, the output means being arranged for outputting the first grey scale voltage when the generated oscillating signal is HIGH and the second selected grey scale voltage when the inverted oscillating signal is HIGH;

wherein each of the predetermined oscillating signals oscillates between a first level and a second level, no more than one of the predetermined oscillating signals being at the first level at any point in a cycle; and

wherein the lengths of the periods in which the predetermined oscillating signals are at the first level are proportional to the weight of corresponding bits of the video data..

In a preferred embodiment the first grey-scale voltage and the second grey-scale voltage are adjacent ones of the plurality of grey-scale voltages.

In a preferred embodiment at least one of the plurality of oscillating signals is an inverted signal which is obtained by inverting another one of the plurality of oscillating signals.

In a preferred embodiment the plurality of oscillating signals include oscillating signals having duty ratios of 8:0, 7:1, 6:2, 5:3, 4:4, 3:5, 2:6 and 1:7, respectively.

In a preferred embodiment the video data consists of $(x+y)$ bits, where each of $x$ and $y$ is a positive integer,

the grey-scale voltage selecting means produces $(2^x+1)$ kinds of grey-scale voltage selecting signals for selecting $2^x$ pairs of a first grey-scale voltage and a second grey-scale voltage among the plurality of grey-scale voltages, the oscillating signal generating means generates $2^y$ kinds of oscillating signals, whereby

$(2^y-1)$ intermediate voltages of levels different from each other are generated between the first grey-scale voltage and the second grey-scale voltage selected by the grey-scale voltage selecting means, thereby displaying an image with $2^{(x+y)}$ grey scales.

In a preferred embodiment the number of the plurality of original oscillating signals is equal to the number of the selected bits among the plurality of bits of the video data.

In a preferred embodiment the output means comprises

(a) control signal output means for outputting a first control signal which oscillates at substantially the same duty ratio as that of said generated oscillating signal to one of said switching means which is supplied with said first grey-scale voltage selected by said grey-scale voltage selecting signals and for outputting a second control signal which oscillates at substantially the same duty ratio as that of said inverted oscillating signal to one of said switching means which is supplied with said second grey-scale voltage selected by said grey-scale voltage selecting signals; and

6

(b) a plurality of switching means, each of said plurality of switching means being supplied with a corresponding one of said plurality of control signals and a corresponding one of the plurality of grey-scale voltages, said grey-scale voltage supplied to said switching means being output to said data lines via said switching means in accordance with said control signal.

In a further preferred embodiment said switching means is an analogue switch.

A display apparatus displays an image with multiple grey scales in accordance with video data consisting of a plurality of bits. The display apparatus includes a display section having a plurality of pixels arranged in a matrix and a plurality of data lines for applying voltages to the plurality of pixels, and a driving circuit for driving the display section.

The driving circuit according to the invention includes oscillating signal specifying means, gray-scale voltage specifying means, and output means. The oscillating signal specifying means specifies one of a plurality of oscillating signals having mean values different from each other, in accordance with a value represented by bits selected from a plurality of bits of the video data. The gray-scale voltage specifying means specifies a pair of gray-scale voltages from a plurality of gray-scale voltages, in accordance with a value represented by the remaining bits other than the above-selected bits. The output means outputs oscillating voltages which oscillate between the pair of gray-scale voltages to data lines, based on the specified oscillating signal and the specified pair of gray-scale voltages. Accordingly, it is possible to realize a plurality of interpolated gray scales between the gray scales corresponding to the plurality of given gray-scale voltages.

The plurality of oscillating signals may alternatively be generated by combining a predetermined number of oscillating signals. By reducing the number of oscillating signals, the scale of the driving circuit can be reduced.

According to the driving circuit of the invention, by using the gray-scale voltage specifying means and the oscillating signal specifying means, it is possible to design a logical circuit in the same manner in both cases where the driving circuit directly outputs one of the plurality of gray-scale voltages and where the driving circuit alternately outputs the specified pair of gray-scale voltages.

Accordingly, it is unnecessary to provide an additional driving circuit depending on the cases where the driving circuit directly outputs one of the plurality of gray-scale voltages and where the driving circuit alternately outputs the specified pair of gray-scale voltages. As a result, it is possible to simplify the configuration of the driving circuit, and the size of the driving circuit can be minimized.

Thus, the invention described herein makes possible the advantage of providing a driving circuit for a display apparatus, which has a simplified and small construction, and which can display an image with multiple gray scales in accordance with multi-bit video data.

This and other advantages of the present invention will become apparent to those skilled in the art upon reading and understanding the following detailed description with reference to the accompanying figures.

## BRIEF DESCRIPTION OF THE DRAWINGS

Figure **1** is a diagram showing the construction of a liquid crystal display apparatus.

Figure **2** is a timing diagram illustrating the relationship among input data, sampling pulses, and an output pulse in one horizontal period.

Figure **3** is a timing diagram illustrating the relationship among input data, an output pulse, an output voltage, and a gate pulse in one vertical period.

Figure **4** is a timing diagram illustrating the relationship among input data, an output pulse, an output voltage, a gate pulse, and a voltage applied to a pixel in one vertical period.

Figure **5** is a waveform chart of an output voltage oscillating in one output period.

Figure **6** is a diagram showing a part of a configuration for a data driver in a driving circuit in Example 1 according to the invention.

Figure **7** is a diagram showing a part of a configuration for a selection control circuit **SCOL** in the driving circuit in Example 1 according to the invention.

Figure **8** is a diagram showing another part of the configuration of the selection control circuit **SCOL** in the driving circuit in Example 1 according to the invention.

Figure **9** is a diagram showing another part of the configuration of the selection control circuit **SCOL** in the driving circuit in Example 1 according to the invention.

Figure **10** is a diagram showing another part of the configuration of the selection control circuit **SCOL** in the driving circuit in Example 1 according to the invention.

Figure **11** is a diagram showing a part of a configuration for a data driver in a driving circuit in Example 2 according to the invention.

Figure **12** is a diagram showing a configuration of an oscillating signal generation circuit in the driving circuit in Example 2 according to the invention.

Figure **13** is a waveform chart of oscillating signals used by the oscillating signal generation circuit.

Figure **14** is a waveform chart of oscillating signals generated by the oscillating signal generation circuit.

Figure **15** is a diagram showing a part of a configuration of a selection control circuit **SCOL** in the driving circuit in Example 2 according to the invention.

Figure **16** is a diagram showing another part of the configuration of the selection control circuit **SCOL** in the driving circuit in Example 2 according to the invention.

Figure **17** is a diagram showing the configuration of an oscillating signal generation circuit in a driving circuit in Example 3 according to the invention.

Figure **18** is a diagram showing the configuration of an oscillating signal generation circuit in a driving circuit for 6 bits according to the invention.

Figure **19** is a diagram showing a part of a configuration of a selection control circuit **SCOL** in the driving circuit for 6 bits according to the invention.

Figure **20** is a diagram showing another part of the configuration of the selection control circuit **SCOL** in the driving circuit for 6 bits according to the invention.

Figure **21** is a diagram showing a part of a configuration for a data driver in a conventional driving circuit.

Figure **22** is a diagram showing a part of a configuration of a data driver in a driving circuit of a related art.

Figure **23** is a waveform chart of signals $t_1$-$t_4$ supplied to a selection control circuit **SCOL** in a conventional driving circuit.

Figure **24** is a diagram showing a part of a configuration of a selection control circuit **SCOL** in a conventional driving circuit.

Figure **25** is a diagram showing another part of the configuration of a selection control circuit **SCOL** in a conventional driving circuit.

## DESCRIPTION OF THE PREFERRED EMBODIMENTS

Hereinafter, the present invention will be described by way of illustrative examples in accordance with the accompanying drawings. In the following description, a matrix type liquid crystal display apparatus is used as an example of a display apparatus. It is appreciated that the present invention is also applicable to other types of display apparatus.

Example 1 (Comparative Example)

Example 1 is disclosed in EP-A-0 624 862, which is prior art under Art 54(3) EPC.

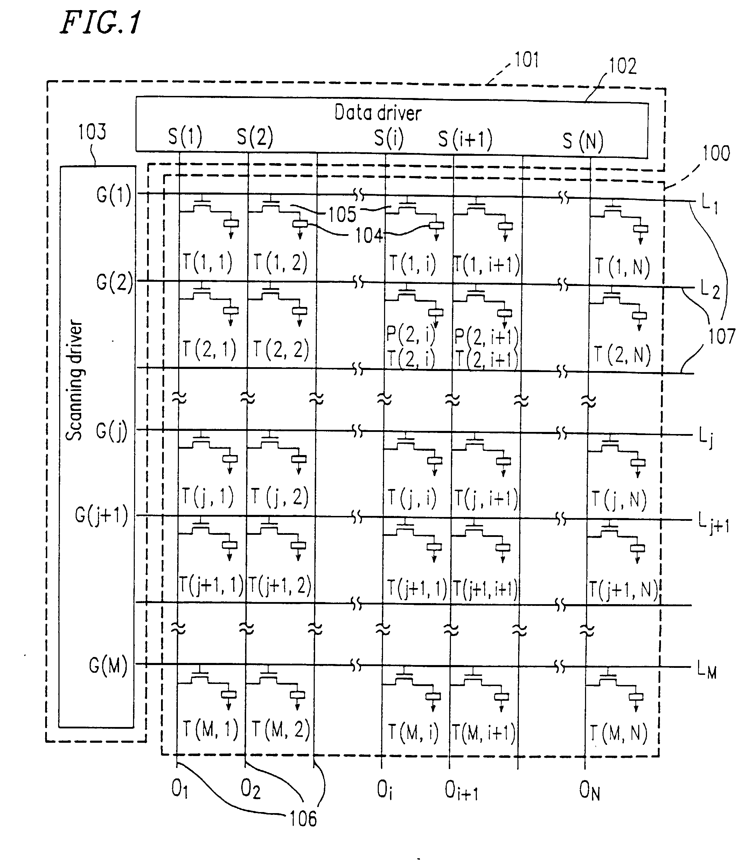

Figure **1** shows a construction of a matrix type liquid crystal display apparatus. The liquid crystal display apparatus shown in Figure **1** includes a display section **100** for displaying a video image, and a driving circuit **101** for driving the display section **100**. The driving circuit **101** includes a data driver **102** which provides video signals to the display section **100** and a scanning driver **103** which provides scanning signals to the display section **100**. The data driver may be called "a source driver" or "a column driver". The scanning driver may be called "a gate driver" or "a row driver".

The display section **100** includes an M x N array of pixels **104** (M pixels in each column and N pixels in each row; where M and N are positive integers), and also includes switching elements **105** respectively connected to the pixels **104**.

In Figure **1**, N data lines **106** are used for connecting respective output terminals **S(i)** (i = 1, 2, ..., N) of the data driver **102** to the corresponding switching elements **105**. Similarly, M scanning lines **107** are used for connecting respective output terminals **G(j)** (j = 1, 2, ..., M) of the scanning driver **103** to the corresponding switching elements **105**. As the switching elements **105**, thin film transistors (TFTs) can be used. Alternatively, other types of switching elements may also be used. The data line may be called "a source line" or "a column line". The scanning line may be called "a gate line" or "a row line".

The scanning driver **103** sequentially outputs a voltage which is kept at a high level during a specific time period from its output terminals **G(j)** to the corresponding scanning lines **107**. The specific time period is referred to as one horizontal period jH (where j is an integer of 1 to M). The total length of time obtained by adding up all the horizontal periods jH (i.e., 1H + 2H + 3H + ... + MH), a blanking period and a vertical synchronizing period is referred to as one vertical period.

When the level of the voltage which is output from the output terminal **G(j)** of the scanning driver **103** to the scanning line **107** is high, the switching element **105** connected to the output terminal **G(j)** is in the ON-state. When the switching element **105** is in the ON-state, the pixel **104** connected to the switching element **105** is charged in accordance with the voltage which is output from the output terminal **S(i)** of the data driver **102** to the corresponding data line **106**. The voltage of the thus charged pixel **104** remains unchanged for about one vertical period until it is charged again by the subsequent voltage to be supplied from the data driver **102**.

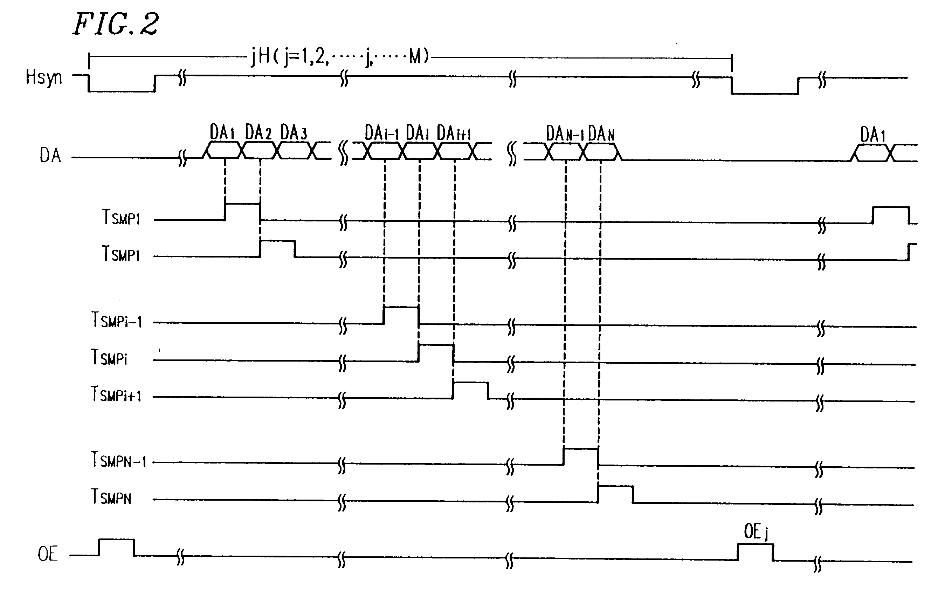

Figure **2** shows the relationship among digital video data DA, sampling pulses $T_{smpi}$, and an output pulse signal OE, during the jth horizontal period jH determined by a horizontal synchronizing signal $H_{syn}$. As can be seen from Figure **2**, while sampling pulses $T_{smp1}$, $T_{smp2}$, ... $T_{smpi}$, ..., and $T_{smpN}$ are sequentially applied to the data driver **102**, digital video data $DA_1$, $DA_2$ ..., $DA_i$ ..., and $DA_N$ are fed into the data driver **102** accordingly. The jth output pulse $OE_j$ determined by the output pulse signal OE is then applied to the data driver **102**. On receiving the jth output pulse $OE_j$, the data driver **102** outputs voltages from its output terminals **S(i)** to the corresponding data lines **106**.

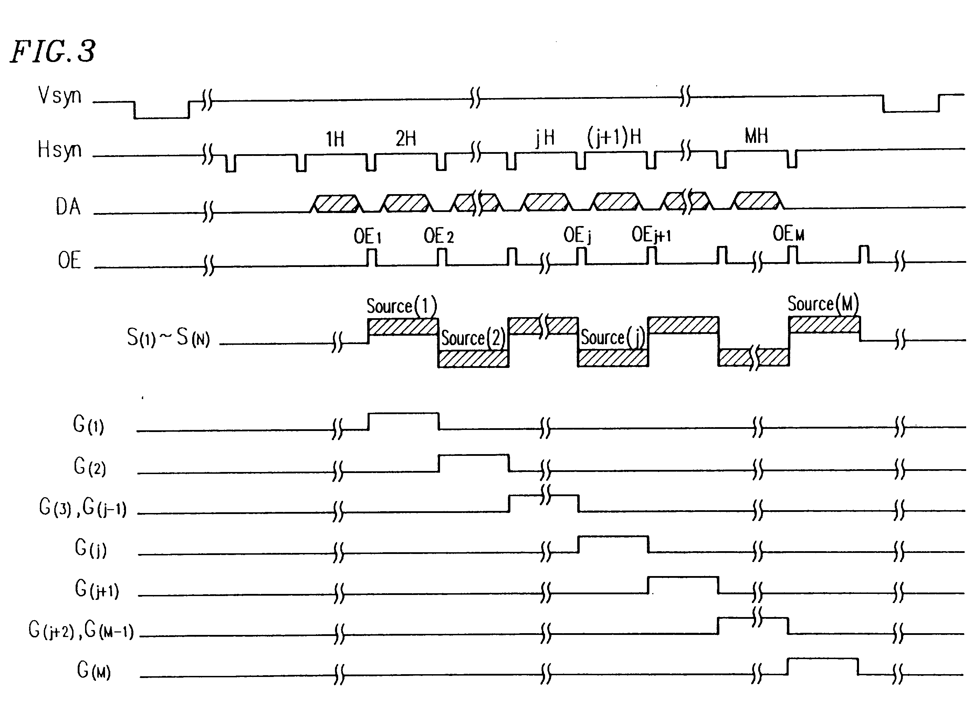

Figure **3** shows the relationship among the horizontal synchronizing signal $H_{syn}$, the digital video data DA, the output pulse signal OE, and the output timing of the data driver **102** and the output timing of the scanning driver **103**, during one vertical period determined by a vertical synchronizing signal $V_{syn}$. In Figure **3**, a SOURCE(j) indicates a level range of voltages output from the data driver **102**, with such timing as shown in Figure **2** and in accordance with the digital video data applied during the horizontal period jH. The SOURCE(j) is shown as a hatched rectangular area to indicate a level range of voltages output from all the N output terminals **S(1)** to **S(N)** of the data driver **102**. While the voltages indicated by the SOURCE(j) are applied to the data lines **106**, the voltage which is output from the jth output terminal **G(j)** of the scanning driver **103** to the jth scanning line **107** is changed to and kept at a high level, thereby turning on all the N switching elements **105** connected to the jth scanning line **107**. As a result, the N pixels **104** respectively connected to these N switching elements **105** are charged in accordance with the voltage applied to the corresponding data lines **106** from the data driver **102**.

The above-described process is repeated M times, i.e., for the 1st to Mth scanning lines **107**, so that an image corresponding to one vertical period is displayed. In the case of non-interlace type display apparatus, the produced image serves as a complete display image on the display screen thereof.

In this specification, the time interval between the jth output pulse $OE_j$ and the (j+1)th output pulse $OE_{j+1}$ in the output pulse signal OE is defined as "one output period". This means that one output period is equal to a period represented by SOURCE(j) shown in Figure **3**. In cases where usual line sequential scanning is performed, one output period is made equal to one horizontal period. The reason for this is as follows. While the data driver **102** outputs voltages corresponding to digital video data for one horizontal (scanning) line, to the data lines **106**, it also performs sampling of digital video data for the next horizontal line. The maximum allowable length of time during which these voltages can be output from the data driver **102** is equal to one horizontal period. Furthermore, except for special cases, as the output period becomes longer, the pixels can be charged more accurately. In this specification, therefore, one output period is assumed to be equal to one horizontal period. According to the present invention, however, one output period is not necessarily required to be equal to one horizontal period.

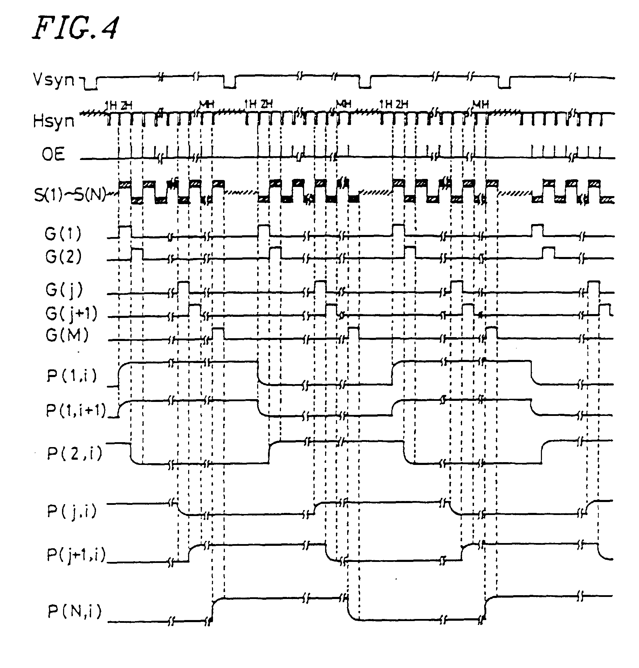

Figure **4** shows, in addition to the timing of the respective signals shown in Figures **2** and **3**, the levels of voltages which are applied to the pixels P (j, i) (j = 1, 2, ⋯, M) in accordance with the timing.

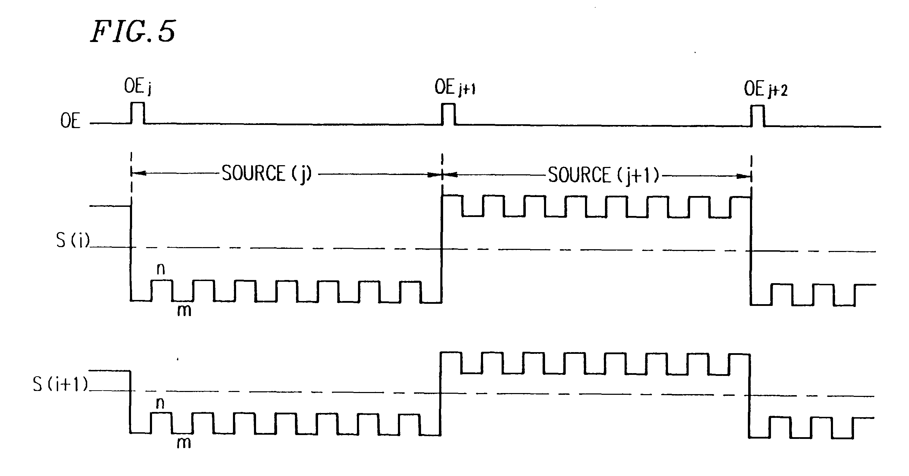

Figure **5** shows an exemplary waveform for a voltage signal output from the data driver **102** to the data lines **106** in one output period. In the case of the conventional data driver, the voltage level of the voltage signal output to the data lines **106** is constant during one output period. On the other hand, from the data driver **102** in this example according to the invention, the voltage signal output to the data lines **106** includes an oscillating component which oscillates during one output period. As is shown in Figure **5**, the voltage signal is a pulse-like signal, and a ratio of a high-level period to a low-level period, i.e., a duty ratio n:m is selected as described below.

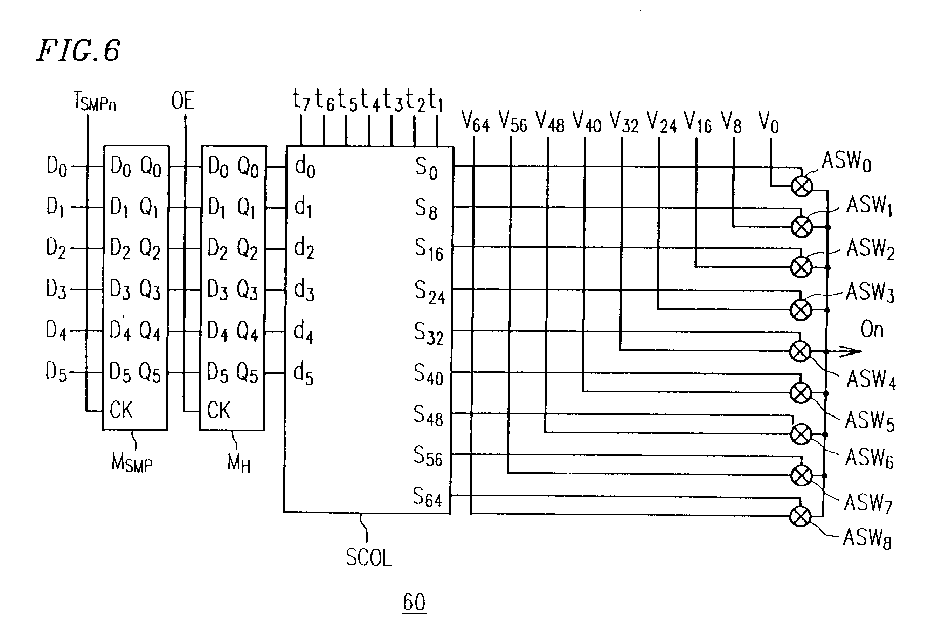

Figure **6** shows a configuration for a part of the data driver **102** in the driving circuit **101**. The circuit **60** shown in Figure **6** outputs a video signal from an nth output terminal **S(n)** to one data line **106**. The data driver **102** includes circuits **60** the number of which is equal to the number of the data lines **106** provided in the display section **100**. Herein, it is assumed that the video data consists of 6 bits ($D_0$, $D_1$, $D_2$, $D_3$, $D_4$, $D_5$). On such an assumption, the video data may have 64 kinds of values of 0 - 63, and the voltage applied to each pixel is one of nine gray-scale voltages $V_0$, $V_8$, $V_{16}$, $V_{24}$, $V_{32}$, $V_{40}$, $V_{48}$, $V_{56}$, and $V_{64}$, or interpolated voltages which are produced from any pair of the gray-scale voltages chosen from $V_0$, $V_8$, $V_{16}$, $V_{24}$, $V_{32}$, $V_{40}$, $V_{48}$, $V_{56}$, and $V_{64}$.

The circuit **60** includes a sampling flip-flop $M_{SMP}$ which performs the sampling operation, a holding flip-flop $M_H$ which performs the holding operation, a selection control circuit **SCOL**, and analog switches $ASW_0$-$ASW_8$. To each of the analog switches $ASW_0$-$ASW_8$, a corresponding one of nine gray-scale voltages $V_0$, $V_8$, $V_{16}$, $V_{24}$, $V_{32}$, $V_{40}$, $V_{48}$, $V_{56}$, and $V_{64}$ is supplied. The gray-scale voltages $V_0$-$V_{64}$ have respective levels which are different from each other. The selection control circuit **SCOL** is supplied with seven oscillating signals $t_1$-$t_7$. The oscillating signals $t_1$-$t_7$ have respective duty ratios which are different from each other.

As the sampling flip-flop $M_{SMP}$ and the holding flip-flop $M_H$, for example, D-type flip-flops can be used. It is appreciated that such sampling and holding flip-flops can be realized by using other types of circuit elements.

Next, by referring to Figure **6**, the operation of the circuit **60** is described. At the rising of a sampling pulse $T_{SMPn}$ corresponding to the nth pixel, the sampling flip-flop $M_{SMP}$ gets video data ($D_0$, $D_1$, $D_2$, $D_3$, $D_4$, $D_5$), and holds the video data therein. When such video data sampling for one horizontal period is completed, an output pulse signal OE is applied to the holding flip-flop $M_H$. When the output pulse signal OE is applied, the video data held in the sampling flip-flop $M_{SMP}$ is fed into the holding flip-flop $M_H$ and output to the selection control circuit **SCOL**. The selection control circuit **SCOL** receives the video data, and produces a plurality of control signals in accordance with the value of the video data. The control signals are used for switching the ON/OFF states of the respective analog switches $ASW_0$-$ASW_8$. The video data input to the selection control circuit **SCOL** is represented by $d_0$, $d_1$, $d_2$, $d_3$, $d_4$, and $d_5$, and the control signals output from the selection control circuit **SCOL** are represented by $S_0$, $S_8$, $S_{16}$, $S_{24}$, $S_{32}$, $S_{40}$, $S_{48}$, $S_{56}$, and $S_{64}$.

Table 2 is a logical table for the lower three bits $d_2$, $d_1$, and $d_0$ of the 6-bit video data. The 1st to 3rd columns of Table 2 indicate the values of video data bits $d_2$, $d_1$, and $d_0$, respectively. The 4th to 11th columns of Table 2 indicate which oscillating signal is specified from the oscillating signals $t_0$-$t_7$. In the 4th to 11th columns of Table 2, the oscillating signal which is indicated by a value of 1 is specified. For example, in the case of $(d_2, d_1, d_0) = (0, 0, 0)$, the oscillating signal $t_0$ is specified. In this example, the oscillating signals $t_0$-$t_7$ are clock signals having duty ratios of 8:0, 7:1, 6:2, 5:3, 4:4, 3:5, 2:6, and 1:7, respectively. Herein, if an oscillating signal has a duty ratio of k:0 or 0:k (k is a natural number), the oscillating signal is defined as always being at a fixed level. The oscillating signals $t_5$, $t_6$, and $t_7$ are the signals obtained by inverting the oscillating signals $t_3$, $t_2$, and $t_1$.

Table 2

| $d_2$ | $d_1$ | $d_0$ | $t_0$ | $t_1$ | $t_2$ | $t_3$ | $t_4$ | $t_5$ | $t_6$ | $t_7$ |
|---|---|---|---|---|---|---|---|---|---|---|
| 0 | 0 | 0 | 1 | | | | | | | |
| 0 | 0 | 1 | | 1 | | | | | | |
| 0 | 1 | 0 | | | 1 | | | | | |
| 0 | 1 | 1 | | | | 1 | | | | |
| 1 | 0 | 0 | | | | | 1 | | | |
| 1 | 0 | 1 | | | | | | 1 | | |
| 1 | 1 | 0 | | | | | | | 1 | |
| 1 | 1 | 1 | | | | | | | | 1 |

From the logical table of Table 2, the following logical equation is obtained.

$$T = (0)t_0 + (1)t_1 + (2)t_2 + (3)t_3 + (4)t_4 + (5)t_5$$

$$+ (6)t_6 + (7)t_7 \tag{6}$$

In the above equation, (i) indicates a value of binary data $(d_2, d_1, d_0)$ which is represented in a decimal notation. That is, $(0) = (d_2, d_1, d_0) = (0, 0, 0)$, $(1) = (d_2, d_1, d_0) = (0, 0, 1)$, $(2) = (d_2, d_1, d_0) = (0, 1, 0)$, $(3) = (d_2, d_1, d_0) = (0, 1, 1)$, $(4) = (d_2, d_1, d_0) = (1, 0, 0)$, $(5) = (d_2, d_1, d_0) = (1, 0, 1)$, $(6) = (d_2, d_1, d_0) = (1, 1, 0)$, and $(7) = (d_2, d_1, d_0) = (1, 1, 1)$.

The oscillating signal $t_0$ is continually at a level of "1", so that Equation (6) can alternatively be represented as the following equation.

$$T = (0) + (1)t_1 + (2)t_2 + (3)t_3 + (4)t_4 + (5)t_5$$

$$+ (6)t_6 + (7)t_7 \tag{7}$$

Table 3 is a logical table representing the relationships among the upper three bits $d_5$, $d_4$, and $d_3$ of the 6-bit video data, and the control signals $S_0$, $S_8$, $S_{16}$, $S_{24}$, $S_{32}$, $S_{40}$, $S_{48}$, $S_{56}$, and $S_{64}$. In Table 3, a variable T denotes a signal T which is defined by Equation (6) or (7). A variable T-bar denotes an inverted signal T-bar obtained by inverting the signal T.

Table 3

| $d_5$ | $d_4$ | $d_3$ | $S_0$ | $S_8$ | $S_{16}$ | $S_{24}$ | $S_{32}$ | $S_{40}$ | $S_{48}$ | $S_{56}$ | $S_{64}$ |
|---|---|---|---|---|---|---|---|---|---|---|---|
| 0 | 0 | 0 | T | $\overline{T}$ | | | | | | | |

Table 3 (continued)

| $d_5$ | $d_4$ | $d_3$ | $S_0$ | $S_8$ | $S_{16}$ | $S_{24}$ | $S_{32}$ | $S_{40}$ | $S_{48}$ | $S_{56}$ | $S_{64}$ |
|---|---|---|---|---|---|---|---|---|---|---|---|
| 0 | 0 | 1 | | T | $\bar{T}$ | | | | | | |
| 0 | 1 | 0 | | | T | $\bar{T}$ | | | | | |
| 0 | 1 | 1 | | | | T | $\bar{T}$ | | | | |
| 1 | 0 | 0 | | | | | T | $\bar{T}$ | | | |
| 1 | 0 | 1 | | | | | | T | $\bar{T}$ | | |
| 1 | 1 | 0 | | | | | | | T | $\bar{T}$ | |
| 1 | 1 | 1 | | | | | | | | T | $\bar{T}$ |

From the logical table of Table 3, the following logical equations are obtained.

$$S_0 = [0]T \tag{8}$$

$$S_8 = [0]"T" + [8]T \tag{9}$$

$$S_{16} = [8]"T" + [16]T \tag{10}$$

$$S_{24} = [16]"T" + [24]T \tag{11}$$

$$S_{32} = [24]"T" + [32]T \tag{12}$$

$$S_{40} = [32]"T" + [40]T \tag{13}$$

$$S_{48} = [40]"T" + [48]T \tag{14}$$

$$S_{56} = [48]"T" + [56]T \tag{15}$$

$$S_{64} = [56]"T" \tag{16}$$

In the above equations, [i] may be a value of logic-0 or logic-1, and j is a value of binary data ($d_5$, $d_4$, $d_3$) which is represented in a decimal notation. When i = (8 x j), [i] = logic-l, and otherwise [i] = logic-0. For example, [8] = "$d_5$" · "$d_4$" · $d_3$. In addition, "T" denotes an inverted signal of the signal T.

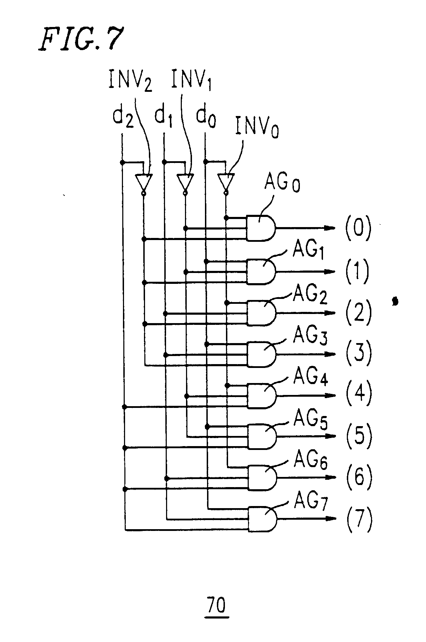

In accordance with the respective logical equations which are described above, logical circuits **70, 80, 90,** and **95** shown in Figures **7** through **10** are obtained. The selection control circuit **SCOL** is constructed, for example, by the logical circuits **70, 80, 90**, and **95** shown in Figures **7** through **10**.

The logical circuit **70** shown in Figure **7** selectively outputs oscillating signal specifying signals (0)-(7) for specifying one of a plurality of oscillating signals $t_0$-$t_7$, in accordance with the lower 3 bits $d_2$, $d_1$, and $d_0$ of the video data. More specifically, the video data $d_2$, $d_1$, and $d_0$ and the inverted signals which are respectively obtained by inverting the video data $d_2$, $d_1$, and $d_0$ by inverter circuits **INV$_0$**, **INV$_1$**, and **INV$_2$** are input into AND circuits **AG$_0$-AG$_7$** in such combinations that constitute 0-7 in binary notation. The oscillating signal specifying signals (0)-(7) are thus obtained as the outputs of the AND circuits **AG$_0$-AG$_7$**.

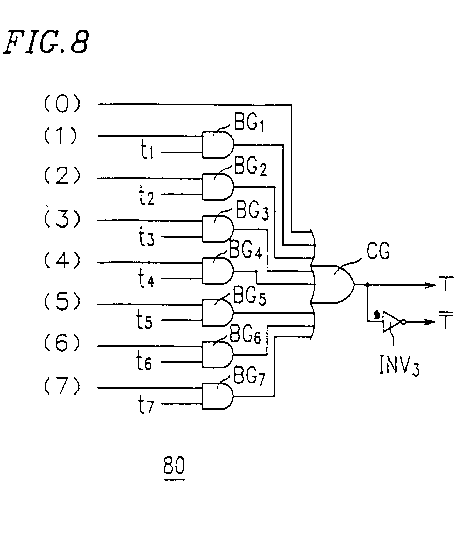

The logical circuit **80** shown in Figure **8** specifies one of the plurality of oscillating signals $t_0$-$t_7$ in accordance with the oscillating signal specifying signals, and produces the specified oscillating signal T and the inverted oscillating signal T-bar which is obtained by inverting the specified oscillating signal T by an inverter circuit $INV_3$. More specifically, the oscillating signal specifying signals (0)-(7) and the oscillating signals $t_1$-$t_7$ are input into AND circuits $BG_1$-$BG_7$, respectively, as is shown in Figure **8**. The outputs of the AND circuits $BG_1$-$BG_7$ are supplied to an OR circuit **CG**. The oscillating signal T and the inverted oscillating signal T-bar are obtained as the output of the OR circuit **CG**.

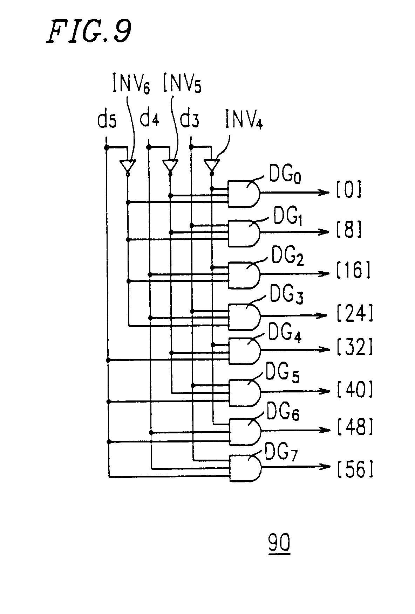

The logical circuit **90** shown in Figure **9** selectively outputs gray-scale voltage specifying signals [0], [8], [16], [24], [32], [40], [48], and [56] for specifying a pair of gray-scale voltages from among a plurality of gray-scale voltages, in accordance with the upper three bits $d_5$, $d_4$, and $d_3$ of the video data. More specifically, the video data $d_5$, $d_4$, and $d_3$ and the inverted signals which are respectively obtained by inverting the video data $d_5$, $d_4$, and $d_3$ by inverter circuits $INV_6$, $INV_5$, and $INV_4$ are input to AND circuits $DG_0$-$DG_7$ in such combinations which constitute 0-7 in the binary notation. As the outputs of the AND circuits $DG_0$-$DG_7$, the gray-scale voltage specifying signals [0], [8], [16], [24], [32], [40], [48], and [56] are obtained.

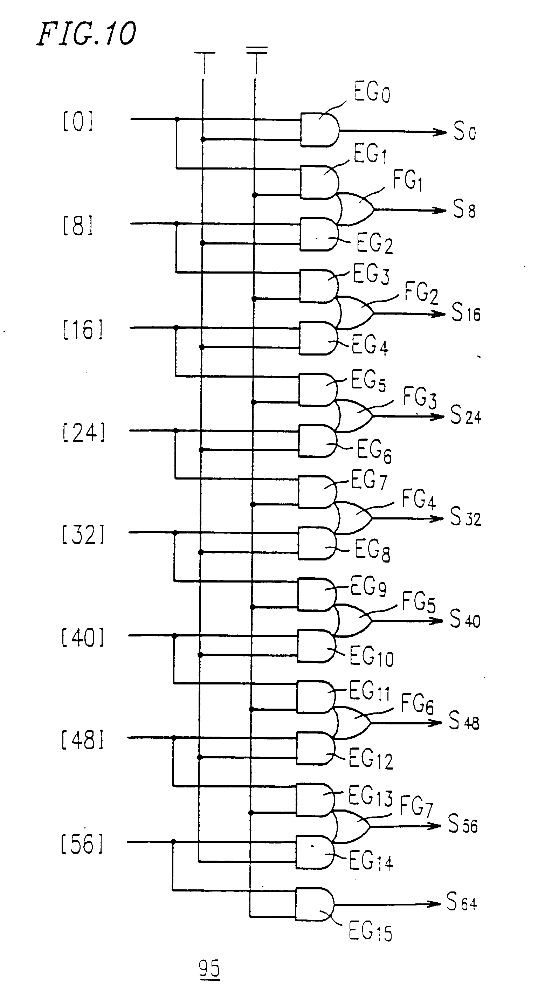

The logical circuit **95** shown in Figure **10** selectively outputs the control signals $S_0$-$S_{64}$, in accordance with the gray-scale voltage specifying signals [0], [8], [16], [24], [32], [40], [48], and [56], the oscillating signal T, and the inverted oscillating signal T-bar. More specifically, the gray-scale voltage specifying signals [0], [8], [16], [24], [32], [40], [48], and [56], and the oscillating signal T are input into AND circuits $EG_0$, $EG_2$, $EG_4$, $EG_6$, $EG_8$, $EG_{10}$, $EG_{12}$, and $EG_{14}$, respectively. The gray-scale voltage specifying signals [0], [8], [16], [24], [32], [40], [48], and [56] and the inverted oscillating signal T-bar are input into AND circuits $EG_1$, $EG_3$, $EG_5$, $EG_7$, $EG_9$, $EG_{11}$, $EG_{13}$, and $EG_{15}$, respectively. The outputs of the AND circuits $EG_1$ and $EG_2$ are coupled to the inputs of an OR circuit $FG_1$, respectively. The outputs of the AND circuits $EG_3$ and $EG_4$ are coupled to the inputs of an OR circuit $FG_2$, respectively. The outputs of the AND circuits $EG_5$ and $EG_6$ are coupled to an OR circuit $FG_3$, respectively. The outputs of the AND circuits $EG_7$ and $EG_8$ are coupled to the inputs of an OR circuit $FG_4$, respectively. The outputs of the AND circuits $EG_9$ and $EG_{10}$ are coupled to the inputs of an OR circuit $FG_5$, respectively. The outputs of the AND circuits $EG_{11}$ and $EG_{12}$ are coupled to the inputs of an OR circuit $FG_6$, respectively. The outputs of the AND circuits $EG_{13}$ and $EG_{14}$ are coupled to the inputs of an OR circuit $FG_7$, respectively. As the outputs of the AND circuit $EG_0$, the OR circuits $FG_1$-$FG_7$, and the AND circuit $EG_{15}$, the control signals $S_0$, $S_8$, $S_{16}$, $S_{24}$, $S_{32}$, $S_{40}$, $S_{48}$, $S_{56}$, and $S_{64}$ are obtained.

The control signals $S_0$, $S_8$, $S_{16}$, $S_{24}$, $S_{32}$, $S_{40}$, $S_{48}$, $S_{56}$, and $S_{64}$ are supplied to the corresponding analog switches $ASW_0$-$ASW_8$. Each of the control signals $S_0$, $S_8$, $S_{16}$, $S_{24}$, $S_{32}$, $S_{40}$, $S_{48}$, $S_{56}$, and $S_{64}$ has either a high-level value or a low-level value. For example, if the control signal is at a high level, the corresponding analog switch is controlled to be in the ON-state. If the control signal is at a low level, the corresponding analog switch is controlled to be in the OFF-state. Alternatively, the relationship between the level of the control signal and the ON/OFF state of the analog signal can be set in a reverse manner.

As described above, in the case where video data consists of a plurality of bits, a waveform of an oscillating voltage is specified in accordance with video data consisting of at least one bit selected from the plurality of bits. Then, in accordance with video data consisting of bits other than the above selected bit(s), a pair of gray-scale voltages are specified from a plurality of gray-scale voltages. As a result, a voltage signal of an appropriate level can be output for every value of video data. The oscillating voltage is used for realizing a plurality of interpolated gray-scale voltages between the specified pair of gray-scale voltages which are specified from among the plurality of gray-scale voltages.

In the case where the value of the video data is a multiple of 8, only one of the plurality of gray-scale voltages may be output. In such a case, the duty ratio n:m of the oscillating signal or the control signal is interpreted to be k:0 or 0:k (k is a natural number).

Alternatively, regardless of whether the value of the video data is a multiple of 8 or not, the specified pair of gray-scale voltages among the plurality of gray-scale voltages may be alternately output.

In the case where such an oscillating voltage is output to the data line of the display apparatus, the AC component of the oscillating voltage is suppressed due to the characteristics of a low-pass filter based on a resistance component and a capacitance component existing between the data line and the pixel. As a result, a voltage which is substantially equal to a mean value of the oscillating voltage is applied to the pixel. Thus, it is possible to attain the same effects as those in the case where a DC voltage is output to the data line of the display apparatus.

As described above, the selection control circuit **SCOL** according to the invention constructed of the logical circuits **70, 80, 90,** and **95** shown in Figures **7** through **10** has a simplified construction as compared with the conventional selection control circuit **SCOL** shown in Figure **22** which is constructed of the logical circuits shown in Figures **24** and **25**. According to the invention, it is possible to display an image with multiple gray scales, such as 64 gray scales, by using a driving circuit having a more simplified construction. For example, in order to realize a display image with 64 gray scales, only 9 gray-scale voltages are required.

In the oscillating signals $t_1$-$t_7$, the oscillating signals $t_5$-$t_7$ are the signals inverted from the oscillating signals $t_1$-$t_3$. Therefore, by inverting the oscillating signals $t_1$-$t_3$, the oscillating signals $t_5$-$t_7$ are obtained in the inside of the selection control circuit **SCOL**. In such a case, it is sufficient to supply only the oscillating signals $t_1$-$t_4$ to the selection control circuit **SCOL**. Thus, it is possible to reduce the number of lines for supplying the oscillating signals to the selection control circuit **SCOL**.

The actual data driver requires selection control circuits **SCOL** the number of which is equal to the number of data lines. Thus, the circuit scale of the selection control circuits **SCOL** largely affects the chip size of an integrated circuit (LSI) on which a data driver is installed. According to the invention, it is possible to significantly reduce the size of the integrated circuit including the selection control circuits **SCOL**. As a result, the production cost of the integrated circuit can be decreased. In cases where the number of bits of video data is increased in order to realize an image of high resolution, such miniaturization of the circuit scale of the data driver is of great use. Accordingly, it is possible to make further progress in the size and cost reduction of the integrated circuit.

In the driving circuit in Example 1 described above, a pair of gray-scale voltages are specified from the plurality of gray-scale voltages, based on the upper three bits $D_5$, $D_4$, and $D_3$ of the 6-bit video data $D_0$, $D_1$, $D_2$, $D_3$, $D_4$, and $D_5$. A pair of analog switches corresponding to the specified pair of gray-scale voltages are driven at a duty ratio corresponding to the lower three bits $D_2$, $D_1$, and $D_0$. However, the invention is not limited to this manner.

In general, the present invention can be applied to a driving circuit for driving a display apparatus in accordance with (x+y) bits. The display apparatus displays an image with $2^{(x+y)}$ gray scales. Herein, x and y are desired positive integers. In the driving circuit according to the invention, a pair of gray-scale voltages among a plurality of gray-scale voltages are specified, based on a value represented by the upper x bits. The required number of gray-scale voltages is $(2^x+1)$, and a gray-scale voltage pair is specified from $2^x$ gray-scale voltage pairs. A pair of analog switches corresponding to the specified gray-scale voltages are driven at a duty ratio corresponding to a value represented by the lower y bits. As a result, between the specified pair of gray-scale voltages, $(2^y-1)$ intermediate voltages can be obtained. Therefore, the number of obtainable intermediate voltages is $2^x(2^y-1)$. The mean values of these intermediate voltages are different from each other.

In order to display an image with 64 gray scales, x and y are selected to be 3 and 3, respectively. This is identical with the above described example. In such a case, $9 (= 2^3+1)$ gray-scale voltages are supplied to the respective analog switches. Based on a value represented by the upper three bits, a gray-scale voltage pair is specified from 8 $(= 2^3)$ gray-scale voltage pairs. A pair of analog switches corresponding to the specified pair of gray-scale voltages are driven at a duty ratio corresponding to a value represented by the lower three bits. Such a driving requires $7 (= 2^3-1)$ oscillating signals having mean values which are different from each other. However, three of the seven oscillating signals are obtained by inverting the other oscillating signals. Therefore, the number of oscillating signals which are actually required is 4 (= 7-3). Accordingly, it is possible to obtain $7 (= 2^3-1)$ intermediate voltages between the specified pair of gray-scale voltages.

Similarly, in order to display an image with 256 gray scales, x and y are selected to be 3 and 5, respectively. In such a case, $9 (= 2^3+1)$ gray-scale voltages are supplied to the respective analog switches. Based on a value represented by the upper three bits, a gray-scale voltage pair is specified from 8 $(= 2^3)$ gray-scale voltage pairs. A pair of analog switches corresponding to the specified pair of gray-scale voltages are driven at a duty ratio corresponding to a value represented by the lower five bits. Such a driving requires $31 (= 2^5-1)$ oscillating signals having mean values which are different from each other. However, fifteen of the thirty-one oscillating signals are obtained by inverting the other oscillating signals. Therefore, the number of oscillating signals which are actually required is 16 (= 31-15). Accordingly, it is possible to obtain $31 (= 2^5-1)$ intermediate voltages between the specified pair of gray-scale voltages.

## Example 2

As described above, when the video data is composed of 6 bits, it is necessary to supply 7 oscillating signals $t_1$-$t_7$ to the selection control circuit **SCOL**. However, the oscillating signals $t_5$-$t_7$ are obtained by inverting the oscillating signals $t_1$-$t_3$, so that it is sufficient to supply only four oscillating signals $t_1$-$t_4$ to the selection control circuit **SCOL**. As the number of bits of the video data increases, the required number of oscillating signals also increases. This results in the increase in number of lines for supplying the oscillating signals to the selection control circuit **SCOL**. For example, when the video data is composed of 8 bits, 31 oscillating signals $t_1$-$t_{31}$ are required. Even if the inverted signals are utilized, 16 oscillating signals $t_1$-$t_{16}$ are required.

The aim of the driving circuit of this example is to reduce the number of oscillating signals. Hereinafter, the configuration of the driving circuit of this example will be described.

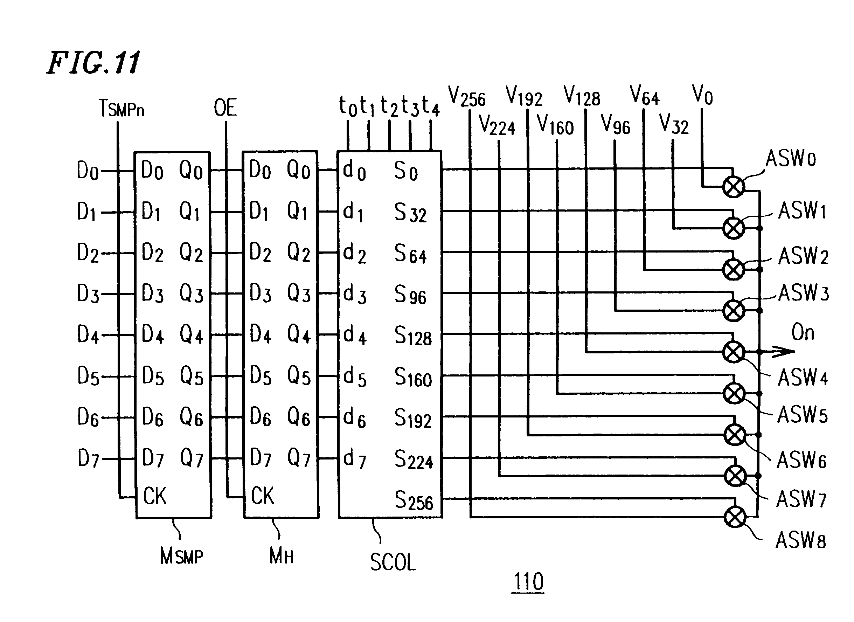

Figure **11** shows the configuration of a circuit corresponding to one output of an 8-bit data driver. The configuration is similar to that of the circuit **60** shown in Figure **6**, so that the detailed description thereof is omitted. To the selection control circuit **SCOL**, oscillating signals $t_0$-$t_4$ are supplied. These oscillating signals may be generated in the driving circuit or may be input from the outside of the driving circuit. The selection control circuit **SCOL** has an oscillating signal generation circuit for combining a required number of oscillating signals based on the oscillating signals $t_0$-$t_4$.

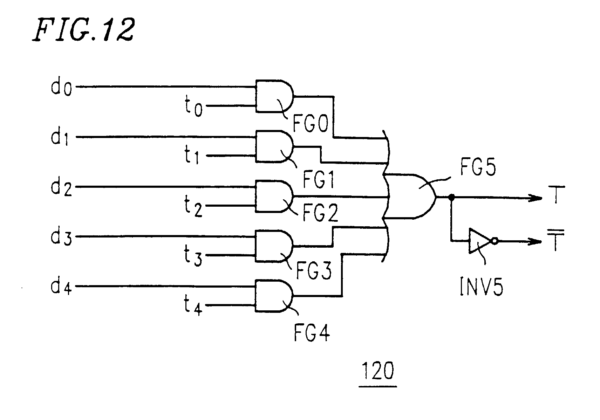

Figure **12** shows the configuration of the oscillating signal generation circuit **120**. The oscillating signal generation circuit **120** includes AND circuits **FG$_0$-FG$_4$** and an OR circuit **FG$_5$**. The AND circuits **FG$_0$-FG$_4$** receive the lower five bits ($d_0$, $d_1$, $d_2$, $d_3$, $d_4$) of the 8-bit video data, respectively. The AND circuits **FG$_0$-FG$_4$** also receive the oscillating signals $t_0$-$t_4$, respectively. The outputs of the AND circuits **FG$_0$-FG$_4$** are coupled to the inputs of the OR circuit **FG$_5$**.

With this configuration, the oscillating signal ($t_0$-$t_4$) can pass through the corresponding AND circuit (**$FG_0$-$FG_4$**), only when the received bit is 1. The oscillating signals passed through the AND circuits **$FG_0$-$FG_4$** are logically added to each other by the OR circuit **$FG_5$**. The output of the OR circuit **$FG_5$** is an oscillating signal T. Also, an inverted oscillating signal T-bar is obtained by an inverter **$INV_5$**.

Each of the oscillating signals $t_0$-$t_4$ is either a high-level value or a low-level value. The oscillating signals $t_0$-$t_4$ are required to satisfy the following conditions.

(1) The high-level periods of the oscillating signals $t_0$-$t_4$ are not overlapped in one cycle.

(2) The lengths of the high-level periods of the oscillating signals $t_0$-$t_4$ in one cycle are weighted in accordance with the corresponding bits of the lower five bits.

It is easily appreciated by a person having ordinary skill in the art that the "high-level" can be replaced with the "low-level" in the conditions (1) and (2).

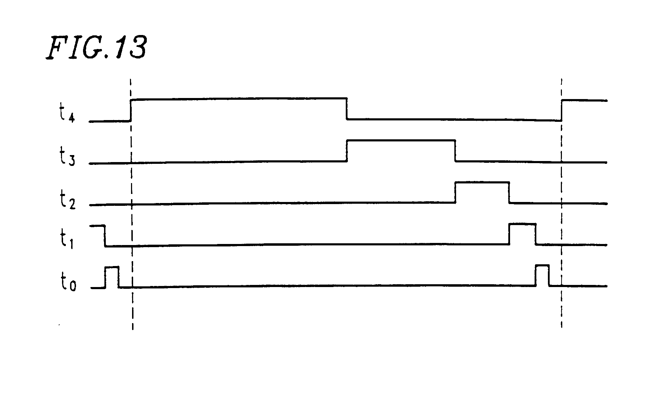

Figure **13** shows exemplary waveforms of the oscillating signals $t_0$-$t_4$. In this example, the oscillating signals $t_0$-$t_4$ correspond to the lower five bits $d_0$-$d_4$ of the 8-bit video data, respectively. The lower five bits $d_0$-$d_4$ correspond to $2^0$-$2^4$, respectively. Accordingly, the lengths of the high-level periods of the oscillating signals $t_0$-$t_4$ in one cycle are weighted in accordance with $2^0$-$2^4$. In this example, if the length of the high-level period of the oscillating signal $t_0$ is assumed to be 1 ($= 2^0$), the length of the high-level period of the oscillating signal $t_1$ in one cycle is 2 ($= 2^1$), the length of the high-level period of the oscillating signal $t_2$ in one cycle is 4 ($= 2^2$), the length of the high-level period of the oscillating signal $t_3$ in one cycle is 8 ($= 2^3$), and the length of the high-level period of the oscillating signal $t_4$ in one cycle is 16 ($= 2^4$). As a result, the mean values of the oscillating signals $t_0$-$t_4$ in one cycle are 1/32, 2/32, 4/32, 8/32, and 16/32, respectively, assuming that, if the signal is kept at the high level in one cycle, the mean value of the signal is 1.

By combining the oscillating signal $t_0$-$t_4$ in accordance with a value represented by the lower five bits $d_0$-$d_4$, the oscillating signal generation circuit generates oscillating signals T having respective mean values corresponding to values represented by the lower five bits $d_0$-$d_4$. As described above, the oscillating signals $t_0$-$t_4$ are used as bases for generating a plurality of oscillating signals T. In this specification, the oscillating signals $t_0$-$t_4$ are referred to as "original oscillating signals".

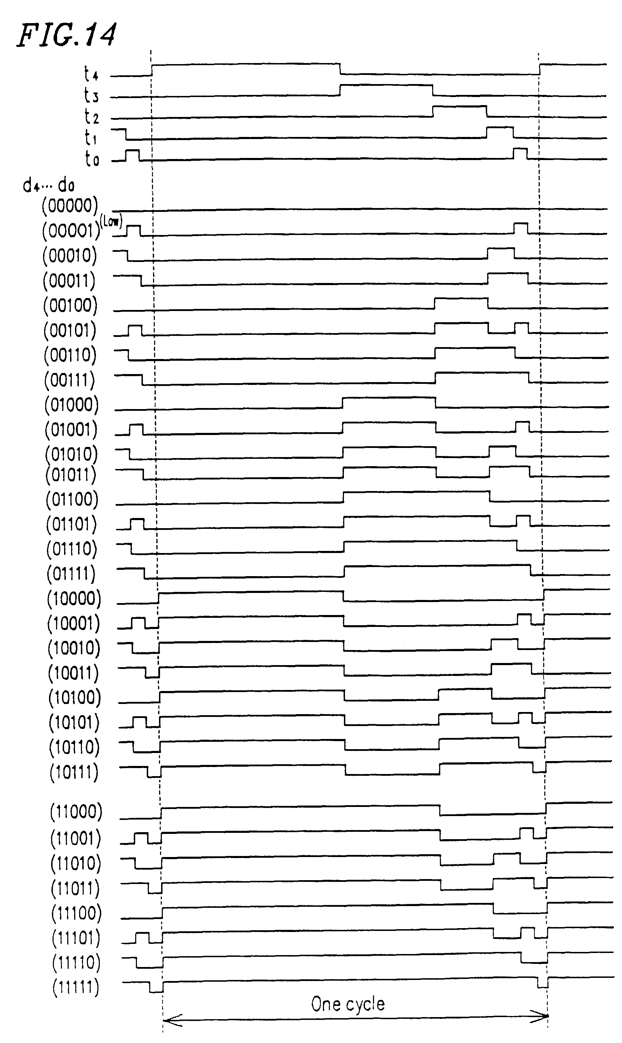

Figure **14** shows waveforms of oscillating signals T generated by the oscillating signal generation circuit, in accordance with the value represented by the lower five bits $d_0$-$d_4$. As shown in Figure **14**, by combining the oscillating signals $t_0$-$t_4$, oscillating signals with mean values in one cycle which are substantially equal to 0/32, 1/32, 2/32, 3/32, ···, 28/32, 29/32, 30/32, 31/32. The signal which is kept at the low level throughout one cycle is regarded as an oscillating signal having a mean value of 0/32 in one cycle.

The configuration of the oscillating signal generation circuit is not limited to that shown in Figure 12. The oscillating signal generation circuit can have a desirably selected circuit configuration, so far as the oscillating signal generation circuit is a logical circuit satisfying the following logical equation (17).

$$T = d_0 t_0 + d_1 t_1 + d_2 t_2 + d_3 t_3 + d_4 t_4 \qquad (17)$$

Table 4 is a logical table showing the relationship among the upper three bits $d_7$, $d_6$, $d_5$ of the 8-bit video data, and the control signals $S_0$, $S_{32}$, $S_{64}$, $S_{96}$, $S_{128}$, $S_{160}$, $S_{192}$, $S_{224}$ and $S_{256}$ output from the selection control circuit **SCOL**. In Table 4, a variable T denotes a signal T defined by equation (17). A variable T-bar is an inverted signal T-bar obtained by inverting the signal T.

Table 4

| $d_7$ | $d_6$ | $d_5$ | $S_0$ | $S_{32}$ | $S_{64}$ | $S_{96}$ | $S_{128}$ | $S_{160}$ | $S_{192}$ | $S_{224}$ | $S_{256}$ |
|---|---|---|---|---|---|---|---|---|---|---|---|
| 0 | 0 | 0 | $\bar{T}$ | T | | | | | | | |
| 0 | 0 | 1 | | $\bar{T}$ | T | | | | | | |
| 0 | 1 | 0 | | | $\bar{T}$ | T | | | | | |
| 0 | 1 | 1 | | | | $\bar{T}$ | T | | | | |
| 1 | 0 | 0 | | | | | $\bar{T}$ | T | | | |
| 1 | 0 | 1 | | | | | | $\bar{T}$ | T | | |
| 1 | 1 | 0 | | | | | | | $\bar{T}$ | T | |

Table 4   (continued)

| $d_7$ | $d_6$ | $d_5$ | $S_0$ | $S_{32}$ | $S_{64}$ | $S_{96}$ | $S_{128}$ | $S_{160}$ | $S_{192}$ | $S_{224}$ | $S_{256}$ |
|---|---|---|---|---|---|---|---|---|---|---|---|
| 1 | 1 | 1 | | | | | | | | $\overline{T}$ | T |

In this way, the operation of the selection control circuit **SCOL** can be expressed in one simplified logical table, as compared with the conventional case.

From the logical table of Table 4, the following logical equations are obtained.

$$S_0 = [0]"T" \tag{18}$$

$$S_{32} = [0]T + [32]"T" \tag{19}$$

$$S_{64} = [32]T + [64]"T" \tag{20}$$

$$S_{96} = [64]T + [96]"T" \tag{21}$$

$$S_{128} = [96]T + [128]"T" \tag{22}$$

$$S_{160} = [128]T + [160]"T" \tag{23}$$

$$S_{192} = [160]T + [192]"T" \tag{24}$$

$$S_{224} = [192]T + [224]"T" \tag{25}$$

$$S_{256} = [224]T \tag{26}$$

In the above equations, [i] is either a value of logic-0 or logic-1, and j is a value of binary data ($d_7$, $d_6$, $d_5$) which is represented in a decimal notation. When i = (32 x j), [i] = logic-1, and otherwise [i] = logic-0. For example, [32] = "$d_7$" · "$d_6$" · $d_5$. In addition, "T" denotes an inverted signal of the signal T.

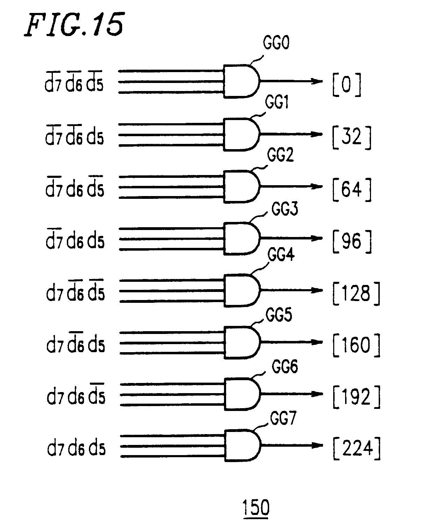

In accordance with the respective logical equations (18) through (26) which are described above, logical circuits **150** and **160** shown in Figures **15** through **16** are obtained. The selection control circuit **SCOL** is constructed, for example, by the logical circuits **120, 150**, and **160** shown in Figures **12, 15**, and **16**.

The logical circuit **150** shown in Figure **15** selectively outputs gray-scale voltage specifying signals [0], [32], [64], [96], [128], [160], [192], and [224] for specifying a pair of gray-scale voltages from among a plurality of gray-scale voltages, in accordance with the upper three bits $d_7$, $d_6$, and $d_5$ of the video data.

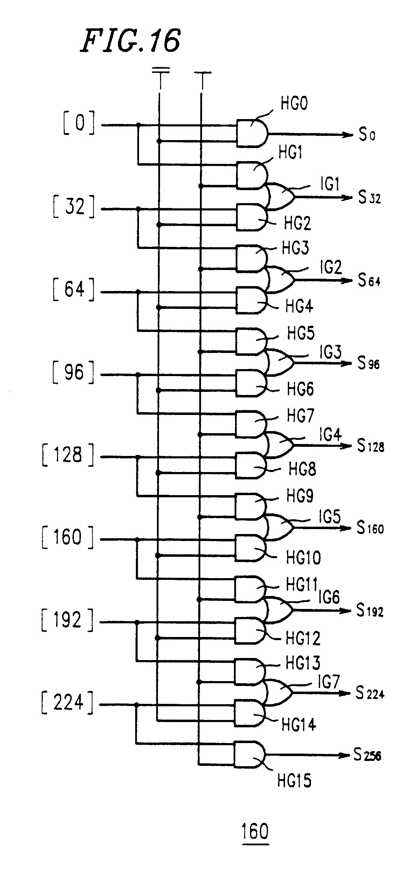

The logical circuit **160** shown in Figure **16** selectively outputs the control signals $S_0$-$S_{256}$, in accordance with the gray-scale voltage specifying signals [0], [32], [64], [96], [128], [160], [192], and [224], the oscillating signal T, and the inverted oscillating signal T-bar. More specifically, the gray-scale voltage specifying signals [0], [32], [64], [96], [128], [160], [192], and [224], and the oscillating signal T are input into AND circuits **HG$_1$**, **HG$_3$**, **HG$_5$**, **HG$_7$**, **HG$_9$**, **HG$_{11}$**, **HG$_{13}$**, and **HG$_{15}$**, respectively. The gray-scale voltage specifying signals [0], [32], [64], [96], [128], [160], [192], and [224] and the inverted oscillating signal T-bar are input into AND circuits **HG$_0$**, **HG$_2$**, **HG$_4$**, **HG$_6$**, **HG$_8$**, **HG$_{10}$**, **HG$_{12}$**, and **HG$_{14}$**, respectively. The outputs of the AND circuits **HG$_1$** and **HG$_2$** are coupled to the inputs of an OR circuit **IG$_1$**, respectively. The outputs of the AND circuits **HG$_3$** and **HG$_4$** are coupled to the inputs of an OR circuit **IG$_2$**, respectively. The outputs of the AND circuits **HG$_5$** and **HG$_6$** are coupled to an OR circuit **IG$_3$**, respectively. The outputs of the AND circuits **HG$_7$** and **HG$_8$** are coupled to the inputs of an OR circuit **IG$_4$**, respectively. The outputs of the AND circuits **HG$_9$** and **HG$_{10}$** are coupled to the inputs of an OR circuit **IG$_5$**, respectively. The outputs of the AND circuits **HG$_{11}$** and **HG$_{12}$**

are coupled to the inputs of an OR circuit $\mathbf{IG_6}$, respectively. The outputs of the AND circuits $\mathbf{HG_{13}}$ and $\mathbf{HG_{14}}$ are coupled to the inputs of an OR circuit $\mathbf{IG_7}$, respectively. As the outputs of the AND circuit $\mathbf{HG_0}$, the OR circuits $\mathbf{IG_1\text{-}IG_7}$, and the AND circuit $\mathbf{HG_{15}}$, the control signals $S_0$, $S_{32}$, $S_{64}$, $S_{96}$, $S_{128}$, $S_{160}$, $S_{192}$, $S_{224}$, and $S_{256}$ are obtained.

The control signals $S_0$, $S_{32}$, $S_{64}$, $S_{96}$, $S_{128}$, $S_{160}$, $S_{192}$, $S_{224}$, and $S_{256}$ are supplied to the corresponding analog switches $\mathbf{ASW_0\text{-}ASW_8}$. Each of the control signals $S_0$, $S_{32}$, $S_{64}$, $S_{96}$, $S_{128}$, $S_{160}$, $S_{192}$, $S_{224}$, and $S_{256}$ has either a high-level value or a low-level value. For example, if the control signal is at a high level, the corresponding analog switch is controlled to be in the ON-state. If the control signal is at a low level, the corresponding analog switch is controlled to be in the OFF-state. Alternatively, the relationship between the level of the control signal and the ON/OFF state of the analog signal can be set in a reverse manner. For the practical LSI, the sizes of the logical circuits **120**, **150**, and **160** can be optimized using design rules for logical circuits.

As described above, in cases where the video data consists of a plurality of bits, oscillating signals having specific waveforms are generated in accordance with video data consisting of at least one bit selected from the plurality of bits, and a pair of gray-scale voltages are specified from a plurality of gray-scale voltages in accordance with video data consisting of bits other than the above-selected bit(s). Thus, a voltage signal of an appropriate level can be output for every value of video data. The oscillating voltage is used for realizing a plurality of interpolated gray-scale voltages between the specified pair of gray-scale voltages which are specified from among the plurality of gray-scale voltages.

By implementing the logical table of Table 4 into logical circuits, it is possible to realize an 8-bit data driver which outputs 31 oscillating voltages which periodically oscillate between the gray-scale voltage $V_{32n}$ and the gray-scale voltage $V_{32(n+1)}$. In the case where such an oscillating voltage is applied to the data line of the display apparatus, the AC component of the oscillating voltage is suppressed due to the characteristics of a low-pass filter based on a resistance component and a capacitance component existing between the data line and the pixel. As a result, a voltage which is substantially equal to a mean value of the oscillating voltage is applied to the pixel. Thus, voltages shown in Table 5 are applied, where $n = 1, 2, 3, 4, 5, 6,$ and $7$. The method for applying the mean voltage to a pixel by utilizing the characteristics of the low-pass filter is described in detail in Japanese Laid-Open Patent Publication No. 6-27900.

## Table 5

| Lower five bits (decimal number) | Voltage | Lower five bits (decimal number) | Voltage |
|---|---|---|---|
| 0 | $V_{32n}$ | 16 | $\dfrac{16V_{32n} + 16V_{32(n+1)}}{32}$ |
| 1 | $\dfrac{31V_{32n} + V_{32(n+1)}}{32}$ | 17 | $\dfrac{15V_{32n} + 17V_{32(n+1)}}{32}$ |
| 2 | $\dfrac{30V_{32n} + 2V_{32(n+1)}}{32}$ | 18 | $\dfrac{14V_{32n} + 18V_{32(n+1)}}{32}$ |
| 3 | $\dfrac{29V_{32n} + 3V_{32(n+1)}}{32}$ | 19 | $\dfrac{13V_{32n} + 19V_{32(n+1)}}{32}$ |
| 4 | $\dfrac{28V_{32n} + 4V_{32(n+1)}}{32}$ | 20 | $\dfrac{12V_{32n} + 20V_{32(n+1)}}{32}$ |
| 5 | $\dfrac{27V_{32n} + 5V_{32(n+1)}}{32}$ | 21 | $\dfrac{11V_{32n} + 21V_{32(n+1)}}{32}$ |
| 6 | $\dfrac{26V_{32n} + 6V_{32(n+1)}}{32}$ | 22 | $\dfrac{10V_{32n} + 22V_{32(n+1)}}{32}$ |
| 7 | $\dfrac{25V_{32n} + 7V_{32(n+1)}}{32}$ | 23 | $\dfrac{9V_{32n} + 23V_{32(n+1)}}{32}$ |
| 8 | $\dfrac{24V_{32n} + 8V_{32(n+1)}}{32}$ | 24 | $\dfrac{8V_{32n} + 24V_{32(n+1)}}{32}$ |
| 9 | $\dfrac{23V_{32n} + 9V_{32(n+1)}}{32}$ | 25 | $\dfrac{7V_{32n} + 25V_{32(n+1)}}{32}$ |
| 10 | $\dfrac{22V_{32n} + 10V_{32(n+1)}}{32}$ | 26 | $\dfrac{6V_{32n} + 26V_{32(n+1)}}{32}$ |
| 11 | $\dfrac{21V_{32n} + 11V_{32(n+1)}}{32}$ | 27 | $\dfrac{5V_{32n} + 27V_{32(n+1)}}{32}$ |
| 12 | $\dfrac{20V_{32n} + 12V_{32(n+1)}}{32}$ | 28 | $\dfrac{4V_{32n} + 28V_{32(n+1)}}{32}$ |
| 13 | $\dfrac{19V_{32n} + 13V_{32(n+1)}}{32}$ | 29 | $\dfrac{3V_{32n} + 29V_{32(n+1)}}{32}$ |
| 14 | $\dfrac{18V_{32n} + 14V_{32(n+1)}}{32}$ | 30 | $\dfrac{2V_{32n} + 30V_{32(n+1)}}{32}$ |
| 15 | $\dfrac{17V_{32n} + 15V_{32(n+1)}}{32}$ | 31 | $\dfrac{V_{32n} + 31V_{32(n+1)}}{32}$ |

$$\text{Where in } n = 0, 1, 2, 3, \cdots 7$$

As described above, according to the driving circuit of this example, it is possible to generate 31 kinds of intermediate voltages between the paired gray-scale voltages. Accordingly, 9 kinds of gray-scale voltages result in a display of an image with 256 gray scales. In addition, according to the driving circuit of this example, a large number of oscillating signals can be generated based on a smaller number of oscillating signals, so that it is possible to reduce the number of lines for supplying the oscillating signals to the selection control circuit. As a result, the driving circuit of this example has a simplified configuration, as compared with the conventional driving circuit or the driving circuit of Example 1.

In this example, the number of the oscillating signals $t_0$-$t_4$ has been assumed to be equal to the number of lower bits (i.e., 5) used for specifying the oscillating signal T of the 8-bit video data. However, the invention is not limited to this specific case. For example, some of the oscillating signals $t_0$-$t_4$ can be omitted, because the omitted oscillating signal(s) can be generated by repeatedly using the remaining oscillating signals. Also, the duty ratio of the oscillating signal is not limited to the above-described example.

## Example 3

As described above, the driving circuit in Example 2 outputs an oscillating voltage which oscillates between the gray-scale voltage $V_{224}$ and the gray-scale voltage $V_{256}$, in accordance with the video data having the maximum value of 255 which can be represented by 8 bits. As a result, intermediate voltages between the gray-scale voltage $V_{224}$ and the gray-scale voltage $V_{256}$ are applied to the pixel.

Example 3 describes a driving circuit which directly outputs the gray-scale voltage $V_{256}$ in accordance with the video data having the maximum value of 255 which can be represented by 8 bits.

The configuration of the driving circuit in this example is identical with that of the driving circuit shown in Figure **11** except for the oscillating signal generation circuit. The oscillating signal generation circuit satisfies the following equation.

$$T = [255]\text{bar} (d_0 t_0 + d_1 t_1 + d_2 t_2 + d_3 t_3 + d_4 t_4) + [255], \tag{27}$$

where $[255] = d_7 \cdot d_6 \cdot d_5 \cdot d_4 \cdot d_3 \cdot d_2 \cdot d_1 \cdot d_0$

According to Equation (27), when the value of the video data is 255, the value of the variable T is 1, so that only the value of the control signal $S_{256}$ is 1 on the basis of Table 4. As a result, only the analog switch $\mathbf{ASW_8}$ is turned ON, so that only the gray-scale voltage $V_{256}$ is output. Accordingly, it is possible to clearly distinguish the gray scales in the case where the video data has the value of 255 from the gray scales in the case where the video data has the value of 254. Therefore, it is possible to increase the contrast (the maximum gray scale / the minimum gray scale) of the image displayed on the display apparatus.

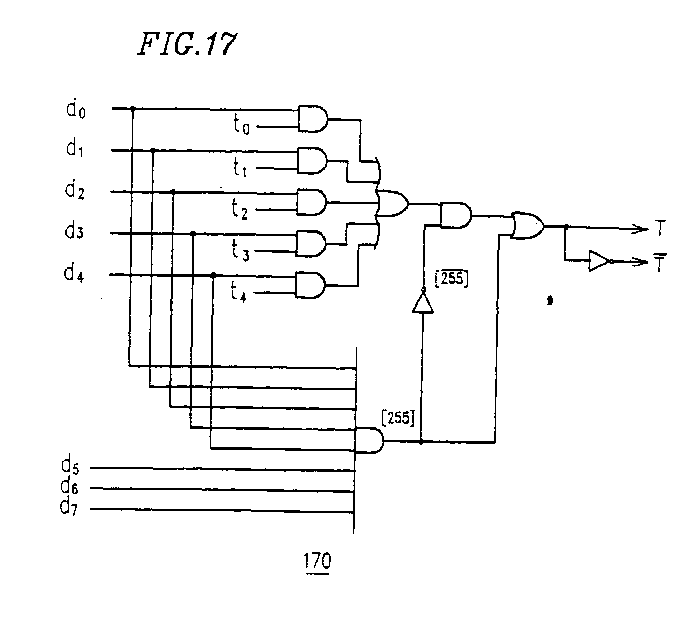

Figure **17** shows an example in which the oscillating signal generation circuit is implemented as a logical circuit. However, the configuration of the oscillating signal generation circuit is not limited to that shown in Figure **17**. The oscillating signal generation circuit can have any desired configuration, so far as the logical circuit satisfies the logical equation expressed as Equation (27).

According to the driving circuit of this example, it is possible to reduce the number of oscillating signals, as in the driving circuit of Example 2. Therefore, it is possible to reduce the number of lines for supplying the oscillating signals to the selection control circuit. Such effects are remarkably attained in cases where the invention is applied to a driving circuit for a display with multiple gray scales such as an 8-bit data driver for the following reasons.

According to the conventional design concept, the 8-bit data driver necessitates 16 oscillating signals. On the other hand, the 8-bit data driver of Examples 2 and 3 only requires five oscillating signals $t_0$-$t_4$. These oscillating signals are required to be supplied to all of the selection control circuits provided in the data driver, so that the lines for supplying the oscillating signals to the selection control circuits are disposed over the entire LSI to which the data driver is mounted. Accordingly, the reduction of the number of lines for supplying the oscillating signals to the selection control circuits largely contributes to the miniaturization of the LSI chip. In addition, the oscillating signals are signals which are always operating, so that the reduction of the number of oscillating signals may result in the reduction of power consumption.

In cases where the invention is applied to a 6-bit data driver, the required number of oscillating signals is reduced from four to three.

As described above, the data drivers of Examples 2 and 3 have at least two features. The first feature is that a plurality of oscillating signals are generated by a simple logic operation with respect to the original oscillating signals. The plurality of oscillating signals are generated by an oscillating signal generation circuit. The second feature is that the plurality of generated oscillating signals are used as parameters for defining the mean value of the oscillating voltage which oscillates between a pair of gray-scale voltages. Due to these features, the driving circuits of Examples 2 and 3 have an advantage in that the size of logical circuits for all of the selection control circuit can drastically be reduced. The advantage is described below in detail.

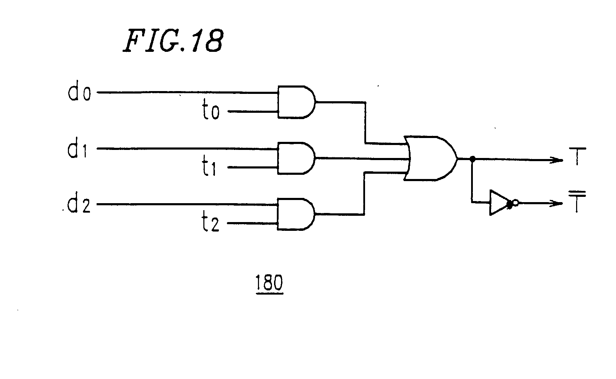

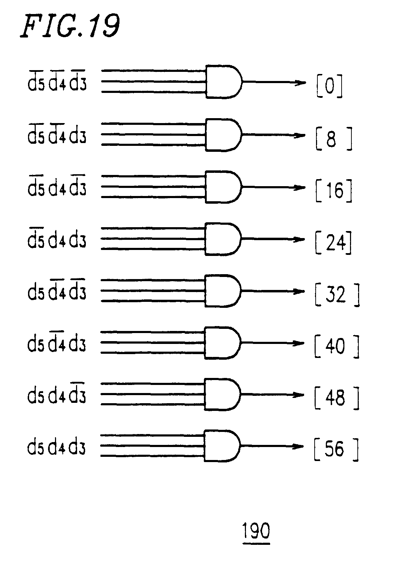

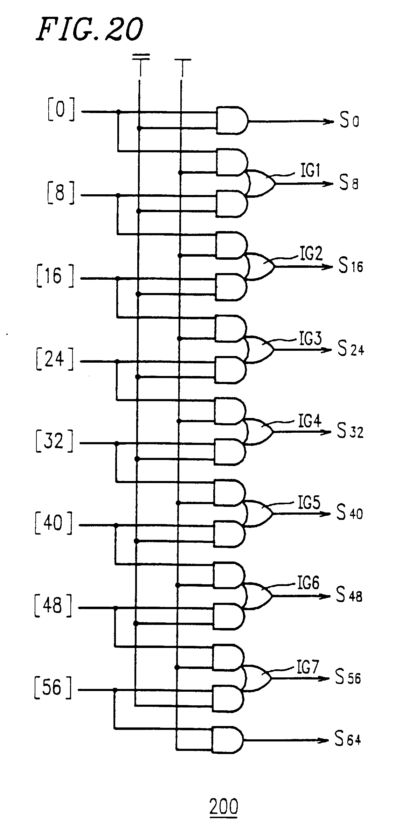

Figures **18**, **19**, and **20** show configurations of a selection control circuit in the 6-bit data driver according to the invention. Table 6 shows the logical table for defining the operation of the selection control circuit. When the configuration of the 8-bit data driver shown in Figures **12**, **15**, and **16** is compared with the configuration of the 6-bit data driver shown in Figures **18**, **19**, and **20**, it is found that they are identical with each other except for the oscillating signal generation circuit. This is because the logical table (Table 4) of the selection control circuit for 8 bits has the same format as that of the logical table (table 6) of the selection control circuit for 6 bits. From the logical tables, in this example, it is found that the required number of gray-scale voltages in the selection control circuit for 8 bits is equal to the required number of gray-scale voltages in the selection control circuit for 6 bits. In this example, the number of gray-scale voltages is 9.

As described above, according to the invention, the selection control circuit for 8 bits can be realized in the same size as that of the selection control circuit for 6 bits. According to the conventional technique, the selection control circuit for 8 bits had the size which was at least several times as large as that of the selection control circuit for 6 bits. Thus, the size reduction effect for the selection control circuit according to the invention is significantly great, because the data driver has a plurality of outputs and each of the outputs requires a selection control circuit. By reducing the size of the selection control circuit, the cost for the entire data driver can be greatly decreased. For example, as the result of the conventional design concept, it was difficult to provide the 8-bit data driver at a reasonable price. According to the invention, such an 8-bit data driver can be provided at a reasonable price for the first time.

For the above-described reasons, as the invention is applied to a data driver for realizing a larger number of gray-scales, the size reduction effect for the selection control circuit according to the invention becomes greater.

Table 6

| $d_5$ | $d_4$ | $d_3$ | $S_0$ | $S_8$ | $S_{16}$ | $S_{24}$ | $S_{32}$ | $S_{40}$ | $S_{48}$ | $S_{56}$ | $S_{64}$ |
|---|---|---|---|---|---|---|---|---|---|---|---|
| 0 | 0 | 0 | $\overline{T}$ | T | | | | | | | |
| 0 | 0 | 1 | | $\overline{T}$ | T | | | | | | |
| 0 | 1 | 0 | | | $\overline{T}$ | T | | | | | |
| 0 | 1 | 1 | | | | $\overline{T}$ | T | | | | |
| 1 | 0 | 0 | | | | | $\overline{T}$ | T | | | |
| 1 | 0 | 1 | | | | | | $\overline{T}$ | T | | |
| 1 | 1 | 0 | | | | | | | $\overline{T}$ | T | |
| 1 | 1 | 1 | | | | | | | | $\overline{T}$ | T |

In addition, when the configuration of the selection control circuit in the 6-bit data driver shown in Figures **18**, **19**, and **20** is compared with the configuration of the selection control circuit in the conventional 6-bit data driver shown in Figures **24** and **25**, the former circuit is much more compact than the latter circuit.

In the above-described examples, the interpolation is started with the gray scale 0 and performed from the gray scale 1. Alternatively, the interpolation may be performed in a reversed sequence. For example, the interpolation is started with the gray scale 255 and performed from the gray scale 254. In this case, in the driving circuit of Example 3, the variable T is defined so that the gray-scale voltage $V_0$ is directly output when the value of the video data is 0.

According to the invention, it is possible to obtain one or more interpolated voltages from voltages supplied from given voltage sources, whereby the number of voltage sources can be greatly decreased as compared with a conventional driving circuit which requires a large number of voltage sources. If the voltage sources are provided from the outside of the driving circuit, the number of input terminals of the driving circuit can be reduced. If the driving circuit is constructed as an LSI, the number of input terminals of the LSI can be reduced. According to the invention, it is possible to realize a driving LSI for displaying an image with multiple gray scales which could not be realized by the prior art example because of the increase in the number of terminals. In the present invention, the following effects can be attained: (1) the production cost of a display apparatus and a driving circuit are largely reduced; (2) a driving circuit for multiple gray scales which could not be practically produced due to the chip size or the LSI installation can be readily produced; and (3) the power consumption is decreased because a large number of voltage sources are not required.

Various other modifications will be apparent to and can be readily made by those skilled in the art without departing from the scope of this invention. Accordingly, it is not intended that the scope of the invention be limited to the description as set forth herein, but by the appended claims.

**Claims**

1. A driving circuit for driving a display apparatus, the display apparatus including pixels and data lines ($S_{(1)}$.. $S_{(n)}$) for applying voltages to said pixels and displaying, in use, an image with multiple grey scales in accordance with video data consisting of a plurality of bits, said driving circuit comprising:

   oscillating voltage selecting means for generating an oscillating signal (T) by selecting one of a plurality of predetermined oscillating signals ($t_i$) or by combining two or more of the plurality of predetermined oscillating signals ($t_i$) in accordance with video data consisting of bits ($d_2,d_1,d_0$) selected from said plurality of bits, and for outputting said generated oscillating signal (T);
   inversion means for inverting said generated oscillating signal (T) thereby to produce an inverted oscillating signal (T);
   grey-scale voltage selecting means for producing grey-scale voltage selecting signals which select a first grey-scale voltage and a second grey-scale voltage from a plurality of grey-scale voltages ($S_0$ ... $S_8$) supplied by a grey-scale voltage supply means, in accordance with video data consisting of bits ($d_5,d_4,d_3$) other than said selected bits of said plurality of bits; and
   output means for outputting said first grey-scale voltage and said second grey-scale voltage selected by said grey-scale voltage selecting means to said data lines, in accordance with said generated oscillating signal (T) and said inverted oscillating signal (T), the output means being arranged for outputting the first grey scale voltage when the generated oscillating signal (T) is HIGH and the second selected grey scale voltage when the inverted oscillating signal (T) is HIGH;
   wherein each of the predetermined oscillating signals ($t_i$) oscillates between a first level and a second level, no more than one of the predetermined oscillating signals ($t_i$) being at the first level at any point in a cycle; and
   wherein the lengths of the periods in which the predetermined oscillating signals ($t_i$) are at the first level are proportional to the weight of corresponding bits of the video data..

2. A driving circuit according to Claim 1, wherein the first grey-scale voltage and the second grey-scale voltage are adjacent ones of the plurality of grey-scale voltages.

3. A driving circuit according to Claim 1 or 2, wherein at least one of the plurality of oscillating signals is an inverted signal which is obtained by inverting another one of the plurality of oscillating signals.

4. A driving circuit according to Claim 1, 2 or 3, wherein the plurality of oscillating signals include oscillating signals having duty ratios of 8:0, 7:1, 6:2, 5:3, 4:4, 3:5, 2:6 and 1:7, respectively.

5. A driving circuit according to any preceding claim, wherein the video data consists of (x+y) bits, where each of x and y is a positive integer,

   the grey-scale voltage selecting means produces ($2^x+1$) kinds of grey-scale voltage selecting signals for selecting $2^x$ pairs of a first grey-scale voltage and a second grey-scale voltage among the plurality of grey-scale voltages,
   the oscillating signal generating means generates $2^y$ kinds of oscillating signals (T), whereby
   ($2^y-1$) intermediate voltages of levels different from each other are generated between the first grey-scale voltage and the second grey-scale voltage selected by the grey-scale voltage selecting means, thereby displaying an image with $2^{(x+y)}$ grey scales.

6. A driving circuit according to any preceding claim, wherein the number of the plurality of original oscillating signals is equal to the number of the selected bits among the plurality of bits of the video data.

7. A driving circuit as claimed in any preceding claim wherein the output means comprises

   (a) control signal output means for outputting a first control signal which oscillates at substantially the same duty ratio as that of said generated oscillating signal (T) to one of said switching means which is supplied with said first grey-scale voltage selected by said grey-scale voltage selecting signals and for outputting a second control signal which oscillates at substantially the same duty ratio as that of said inverted oscillating signal (T) to one of said switching means which is supplied with said second grey-scale voltage selected by said grey-scale voltage selecting signals; and

(b) a plurality of switching means, each of said plurality of switching means being supplied with a corresponding one of said plurality of control signals and a corresponding one of the plurality of grey-scale voltages, said grey-scale voltage supplied to said switching means being output to said data lines via said switching means in accordance with said control signal.

**8.** A driving circuit according to claim 7, wherein said switching means is an analogue switch.

**Patentansprüche**

**1.** Steuerungsschaltung zum Ansteuern einer Anzeigevorrichtung, die Pixel und Datenleitungen ($S_{(1)}$ .. $S_{(n)}$) zum Anlegen von Spannungen an die Pixel aufweist und im Gebrauch ein Bild mit mehreren Grauwerten entsprechend Videodaten, die aus mehreren Bits bestehen, anzeigt, wobei die Steuerungsschaltung folgendes aufweist:

- eine Schwingungsspannung-Auswähleinrichtung zum Erzeugen eines Schwingungssignals (T) durch Auswählen eines von mehreren vorbestimmten Schwingungssignalen ($t_i$) oder durch Kombinieren von zwei oder mehr der mehreren vorbestimmten Schwingungssignale ($t_i$) gemäß Videodaten, die aus Bits ($d_2$, $d_1$, $d_0$) bestehen, die aus den mehreren Bits ausgewählt sind, und um das erzeugte Schwingungssignal (T) auszugeben;
- eine Invertiereinrichtung zum Invertieren des erzeugten Schwingungssignals (T) um dadurch ein invertiertes Schwingungssignal (T) zu erzeugen;
- eine Grauwertespannung-Auswähleinrichtung zum Erzeugen einer Grauwertespannung zum Auswählen von Signalen, die eine erste Grauwertespannung und eine zweite Grauwertespannung aus mehreren von einer Grauwertespannung-Liefereinrichtung gelieferten Grauwertespannungen ($S_0$ ... $S_8$) entsprechend Videodaten auswählt, die aus anderen Bits ($d_5$, $d_4$, $d_3$) als den ausgewählten Bits der mehreren Bits bestehen; und
- eine Ausgabeeinrichtung zum Ausgeben der durch die Grauwertespannung-Auswähleinrichtung ausgewählten ersten Grauwertespannung und der zweiten Grauwertespannung an die Datenleitungen entsprechend dem erzeugten Schwingungssignal (T) und dem invertierten Schwingungssignal (T), wobei die Ausgabeeinrichtung so ausgebildet ist, dass sie die erste Grauwertespannung ausgibt, wenn das erzeugte Schwingungssignal (T) HOCH ist, und sie die zweite ausgewählte Grauwertespannung ausgibt, wenn das invertierte Schwingungssignal (T) HOCH ist;
- wobei jedes der vorbestimmten Schwingungssignale ($t_i$) zwischen einem ersten Pegel und einem zweiten Pegel schwingt, wobei sich nicht mehr als eines der vorbestimmten Schwingungssignale ($t_i$) zu irgendeinem Zeitpunkt in einem Zyklus auf dem ersten Pegel befindet; und
- wobei die Längen der Perioden, in denen sich die vorbestimmten Schwingungssignale ($t_i$) auf dem ersten Pegel befinden, proportional zum Gewicht entsprechender Bits der Videodaten sind.

**2.** Steuerungsschaltung nach Anspruch 1, bei der die erste Grauwertespannung und die zweite Grauwertespannung benachbarte Spannungen unter den mehreren Grauwertespannungen sind.

**3.** Steuerungsschaltung nach Anspruch 1 oder 2, bei der mindestens eines der mehreren Schwingungssignale ein invertiertes Signal ist, das durch Invertieren eines anderen der mehreren Schwingungssignale erhalten wird.

**4.** Steuerungsschaltung nach Anspruch 1, 2 oder 3, wobei die mehreren Schwingungssignale Schwingungssignale mit Tastverhältnissen 8:0, 7:1, 6:2, 5:3, 4:4, 3:5, 2:6 bzw. 1:7 umfassen.

**5.** Steuerungsschaltung nach einem der vorstehenden Ansprüche, bei der

- die Videodaten aus (x+y) Bits bestehen, wobei x und y jeweils eine positive ganze Zahl sind;
- die Grauwertespannung-Auswähleinrichtung ($2^x$+1) Arten von Grauwertespannung-Auswählsignalen zum Auswählen von $2^x$ Paaren einer ersten Grauwertespannung und einer zweiten Grauwertespannung unter den mehreren Grauwertespannungen erzeugt;
- die Schwingungssignal-Erzeugungseinrichtung $2^y$ Arten von Schwingungssignalen (T) erzeugt, wodurch
- ($2^y$-1) Zwischenspannungen mit voneinander verschiedenen Pegeln zwischen der durch die Grauwertespannung-Auswähleinrichtung ausgewählten ersten Grauwertespannung und der zweiten Grauwertespannung erzeugt werden, um dadurch ein Bild mit $2^{(x+y)}$ Grauwerten anzuzeigen.

**6.** Steuerungsschaltung nach einem der vorstehenden Ansprüche, bei der die Anzahl der mehreren ursprünglichen Schwingungssignale der Anzahl der ausgewählten Bits unter den mehreren Bits der Videodaten entspricht.

**EP 0 655 726 B1**

7. Steuerungsschaltung nach einem der vorstehenden Ansprüche, bei der die Ausgabeeinrichtung folgendes aufweist:

   (a) eine Steuerungssignal-Ausgabeeinrichtung zum Ausgeben eines ersten Steuerungssignals, das im wesentlichen mit demselben Tastverhältnis wie dem des erzeugten Schwingungssignals (T) schwingt, an eine der Schalteinrichtungen, die mit der durch die Grauwertespannung-Auswählsignale ausgewählten ersten Grauwertespannung versorgt wird, und zum Ausgeben eines zweiten Steuerungssignals, das im wesentlichen mit demselben Tastverhältnis wie dem des invertierten Schwingungssignals (T) schwingt, an eine der Schalteinrichtungen, die mit den durch die Grauwertespannung-Auswählsignalen ausgewählten Grauwertespannung versorgt wird; und
   (b) mehrere Schalteinrichtungen, von denen jede mit einem entsprechenden der mehreren Steuerungssignale und einem entsprechenden der mehreren Grauwertespannungen versorgt wird, wobei die an die Schalteinrichtung gelieferte Grauwertespannung über die Schalteinrichtung entsprechend dem Steuerungssignal an die Datenleitungen ausgegeben wird.

8. Steuerungsschaltung nach Anspruch 7, bei der die Schalteinrichtung ein Analogschalter ist.


## Revendications

1. Circuit de commande pour commander un dispositif d'affichage, le dispositif d'affichage incluant des lignes de pixels et de données $(S_{(1)} \dots S_{(n)})$ pour appliquer des tensions auxdits pixels et afficher, en service, une image avec plusieurs échelles de gris en fonction de données vidéo composées d'une pluralité de bits, ledit circuit de commande comprenant:

   des moyens de sélection de tension oscillante pour produire un signal oscillant (T) en sélectionnant un signal parmi une pluralité de signaux oscillants prédéterminés $(t_i)$ ou en associant deux signaux ou plus de la pluralité de signaux oscillants prédéterminés $(t_i)$ en fonction de données vidéo composées de bits $(d_2, d_1, d_0)$ sélectionnés dans ladite pluralité de bits, et pour délivrer ledit signal oscillant produit (T);
   des moyens d'inversion pour inverser ledit signal oscillant produit (T) afin de produire ainsi un signal oscillant inversé (T);
   des moyens de sélection de tension d'échelle de gris pour produire des signaux de sélection de tension d'échelle de gris qui sélectionnent une première tension d'échelle de gris et une seconde tension d'échelle de gris dans une pluralité de tensions d'échelle de gris $(S_0 \dots S_8)$ fournie par des moyens de fourniture de tensions d'échelle de gris, en fonction de données vidéo composées de bits $(d_5, d_4, d_3)$ différents desdits bits sélectionnés de ladite pluralité de bits; et
   des moyens de sortie pour délivrer ladite première tension d'échelle de gris et ladite seconde tension d'échelle de gris sélectionnées par lesdits moyens de sélection de tension d'échelle de gris auxdites lignes de données, en fonction dudit signal oscillant produit (T) et dudit signal oscillant inversé (T), les moyens de sortie étant prévus de manière à délivrer la première tension d'échelle de gris lorsque le signal oscillant produit (T) est à un état haut et la seconde tension d'échelle de gris sélectionnée lorsque le signal oscillant inversé (T) est à un état haut;
   dans lequel chaque signal parmi les signaux oscillants prédéterminés $(t_i)$ oscille entre un premier niveau et un second niveau, pas davantage qu'un des signaux oscillants prédéterminés $(t_i)$ se trouvant au premier niveau à n'importe quel point dans un cycle; et
   dans lequel les longueurs des périodes dans lesquelles les signaux oscillants prédéterminés $(t_i)$ sont au premier niveau sont proportionnelles au poids de bits correspondants des données vidéo.

2. Circuit de commande selon la revendication 1, dans lequel la première tension d'échelle de gris et la seconde tension d'échelle de gris sont des tensions adjacentes de la pluralité de tensions d'échelle de gris.

3. Circuit de commande selon la revendication 1 ou 2, dans lequel au moins un signal de la pluralité de signaux oscillants est un signal inversé qui est obtenu en inversant un autre signal de la pluralité de signaux oscillants.

4. Circuit de commande selon la revendication 1, 2 ou 3, dans lequel la pluralité de signaux oscillants inclut des signaux oscillants ayant des rapports cycliques de 8:0, 7:1, 6:2, 5:3, 4:4, 3:5, 2:6 et 1:7, respectivement.

5. Circuit de commande selon l'une quelconque des revendications précédentes, dans lequel les données vidéo sont composées de (x+y) bits, où x et y sont des entiers positifs,

les moyens de sélection de tension d'échelle de gris produisent ($2^x$+1) types de signaux de sélection de tension d'échelle de gris pour sélectionner $2^x$ paires d'une première tension d'échelle de gris et d'une seconde tension d'échelle de gris parmi la pluralité de tensions d'échelle de gris,
les moyens de génération de signal oscillant produisent $2^y$ types de signaux oscillants (T), de façon que ($2^y$-1) tensions intermédiaires ayant des niveaux différents sont produites entre la première tension d'échelle de gris et la seconde tension d'échelle de gris sélectionnées par les moyens de sélection de tension d'échelle de gris, afin d'afficher ainsi une image avec $2^{(x+y)}$ échelles de gris.

6. Circuit de commande selon l'une quelconque des revendications précédentes, dans lequel le nombre de la pluralité de signaux oscillants originaux est égal au nombre des bits sélectionnés dans la pluralité de bits des données vidéo.

7. Circuit de commande selon l'une quelconque des revendications précédentes dans lequel les moyens de sortie comprennent

(a) des moyens de sortie de signal de commande pour délivrer un premier signal de commande qui oscille avec sensiblement le même rapport cyclique que celui dudit signal oscillant produit (T) pour un desdits moyens de commutation qui est alimenté avec ladite première tension d'échelle de gris sélectionnée par lesdits signaux de sélection de tension d'échelle de gris, et pour délivrer un second signal de commande qui oscille avec sensiblement le même rapport cyclique que celui dudit signal oscillant inversé (T) pour un desdits moyens de commutation qui est alimenté avec ladite seconde tension d'échelle de gris sélectionnée par lesdits signaux de sélection de tension d'échelle de gris; et
(b) une pluralité de moyens de commutation, chaque moyen de ladite pluralité de moyens de commutation étant alimenté avec un signal correspondant de ladite pluralité de signaux de commande et une tension correspondante de la pluralité de tensions d'échelle de gris, ladite tension d'échelle de gris fournie audit moyen de commutation étant délivrée auxdites lignes de données par l'intermédiaire desdits moyens de commutation en fonction dudit signal de commande.

8. Circuit de commande selon la revendication 7, dans lequel ledit moyen de commutation est constitué par un commutateur analogique.

## FIG.1

FIG.2

EP 0 655 726 B1

FIG.3

## FIG.4

FIG.5

EP 0 655 726 B1

*FIG.6*

60

EP 0 655 726 B1

FIG.7

70

FIG.8

80

## FIG.9

90

# FIG.10

95

FIG.11

*FIG.12*

120

EP 0 655 726 B1

FIG.13

36

## FIG.14

*FIG.15*

$$\overline{d_7}\,\overline{d_6}\,\overline{d_5} \quad \overset{GG0}{\longrightarrow}\quad [0]$$

$$\overline{d_7}\,\overline{d_6}\,d_5 \quad \overset{GG1}{\longrightarrow}\quad [32]$$

$$\overline{d_7}\,d_6\,\overline{d_5} \quad \overset{GG2}{\longrightarrow}\quad [64]$$

$$\overline{d_7}\,d_6\,d_5 \quad \overset{GG3}{\longrightarrow}\quad [96]$$

$$d_7\,\overline{d_6}\,\overline{d_5} \quad \overset{GG4}{\longrightarrow}\quad [128]$$

$$d_7\,\overline{d_6}\,d_5 \quad \overset{GG5}{\longrightarrow}\quad [160]$$

$$d_7\,d_6\,\overline{d_5} \quad \overset{GG6}{\longrightarrow}\quad [192]$$

$$d_7\,d_6\,d_5 \quad \overset{GG7}{\longrightarrow}\quad [224]$$

150

# FIG.16

160

*FIG.17*

170

FIG.18

180

## *FIG.19*

$\overline{d_5}\,\overline{d_4}\,\overline{d_3}$ ⟶ [0]

$\overline{d_5}\,\overline{d_4}\,d_3$ ⟶ [8]

$\overline{d_5}\,d_4\,\overline{d_3}$ ⟶ [16]

$\overline{d_5}\,d_4\,d_3$ ⟶ [24]

$d_5\,\overline{d_4}\,\overline{d_3}$ ⟶ [32]

$d_5\,\overline{d_4}\,d_3$ ⟶ [40]

$d_5\,d_4\,\overline{d_3}$ ⟶ [48]

$d_5\,d_4\,d_3$ ⟶ [56]

190

## FIG.20

200

## FIG. 21 *PRIOR ART*

*FIG.22*

220

## FIG.23

FIG.24

*FIG.25*